# DEMANDE DE BREVET EUROPEEN

(11) **EP 4 269 789 A1**
(43) Date de publication de la demande: **01.11.2023**
(21) Numéro de dépôt: 22170739.1
(22) Date de dépôt: 29.04.2022
(51) Int. Cl.: F03G 7/10

(54) **MOTEUR À BOULES MÉTALLIQUES EN DYNAMIQUE GRAVITATIONNELLE AVEC CONVERTISSEUR "ÉNERGIE MÉCANIQUE EN ÉNERGIE ÉLECTRIQUE"**

(30) Priorité: 28.04.2022 WO PCT/FR2022/280422
(71) Demandeur: Cressent, Dominique, 93200 Saint Denis Ile de France (FR)
(72) Inventeur: Cressent, Dominique, 93200 Saint Denis Ile de France (FR)

(57) **Abrégé**

La demande divulgue un moteur spécifique qui transforme l'énergie gravitationnelle terrestre en énergie mécanique. Le moteur est accouplé à un convertisseur d'énergie mécanique en énergie électrique pour devenir une nouvelle énergie renouvelable produisant de l'électricité 24H/24H, 7 jours sur 7, le tout indépendamment des conditions météorologiques dans la zone géographique où il sera situé et avec zéro carbone d'émission. Cette électricité alimentera des zones habitées ou produira de l'hydrogène et de l'oxygène par électrolyse de l'eau. L'énergie produite en électricité en sortie du convertisseur aura une puissance en watts constante et stable dans le temps puisque la gravité terrestre exploitée à la source par le process a une puissance en énergie constante et stable perpétuellement.

## Description

### Domaine technique: les énergies renouvelables

Le **M**oteur à **B**oules **M**étalliques en **D**ynamique **G**ravitationnelle, noté en abrégé « MBMDG », est un moteur spécifique qui transforme l'énergie gravitationnelle terrestre en énergie mécanique.

Le MBMDG sera accouplé à un convertisseur d'énergie mécanique en énergie électrique pour devenir une nouvelle énergie renouvelable produisant de l'électricité 24H/24H, 7 jours sur 7, le tout indépendamment des conditions météorologiques dans la zone géographique où il sera situé et avec zéro carbone d'émission.

Cette électricité alimentera des zones habitées ou produira de l'hydrogène et de l'oxygène par électrolyse de l'eau.

L'énergie produite en électricité en sortie du convertisseur aura une puissance en watts constante et stable dans le temps puisque la gravité terrestre exploitée à la source par le process a une puissance en énergie constante et stable perpétuellement.

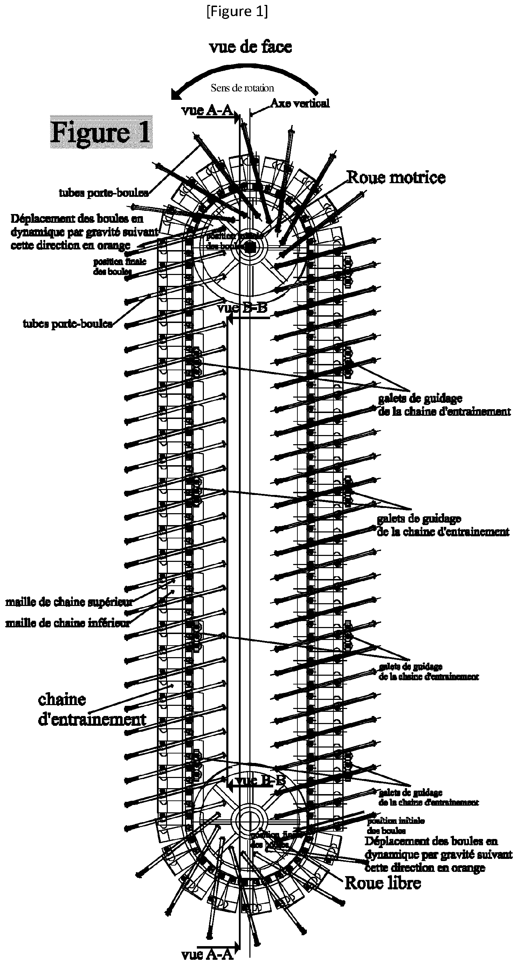

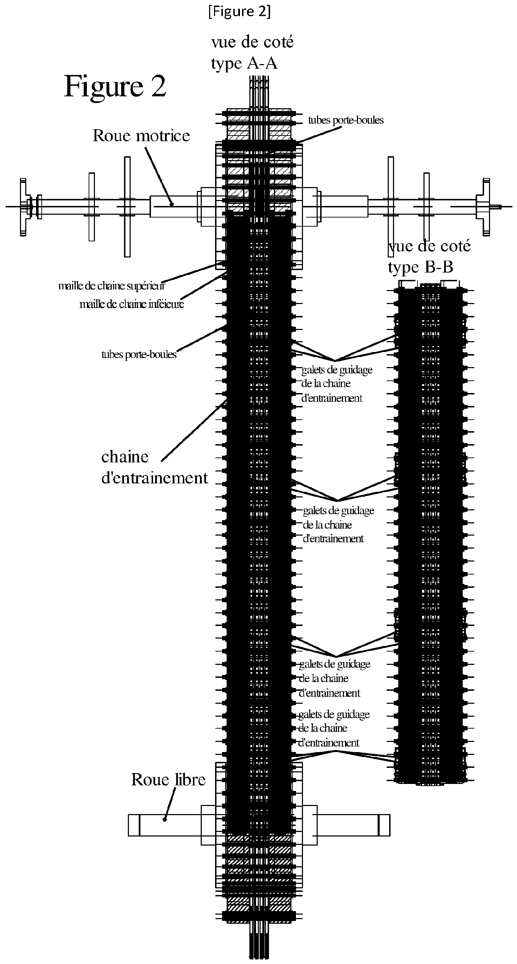

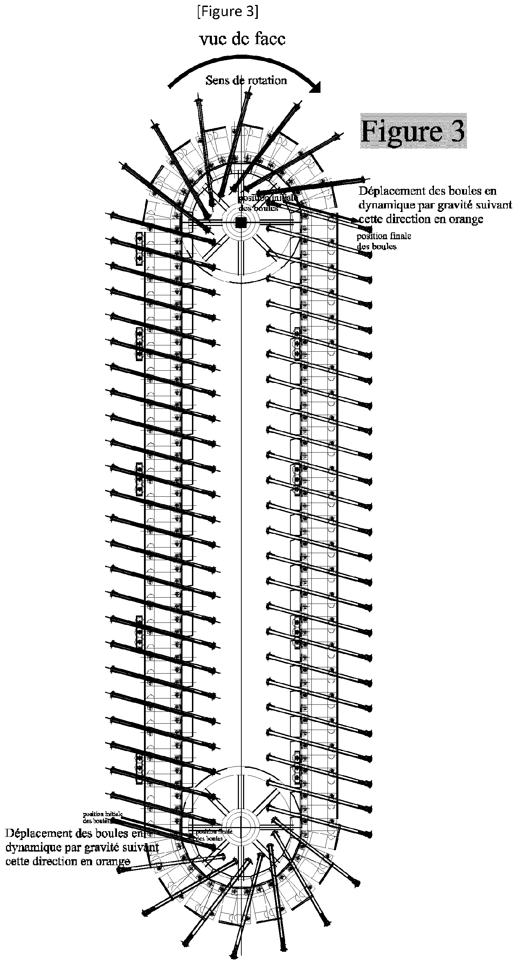

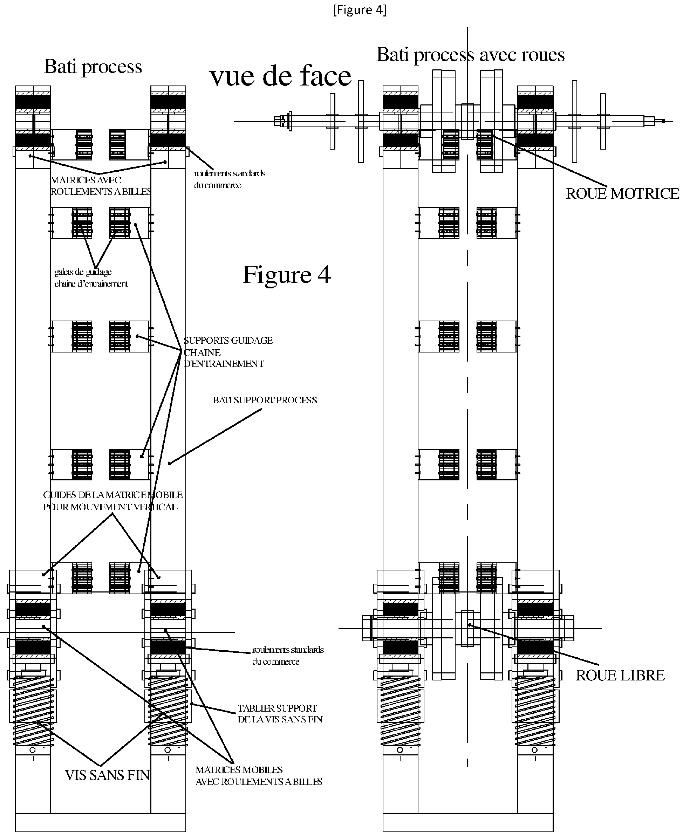

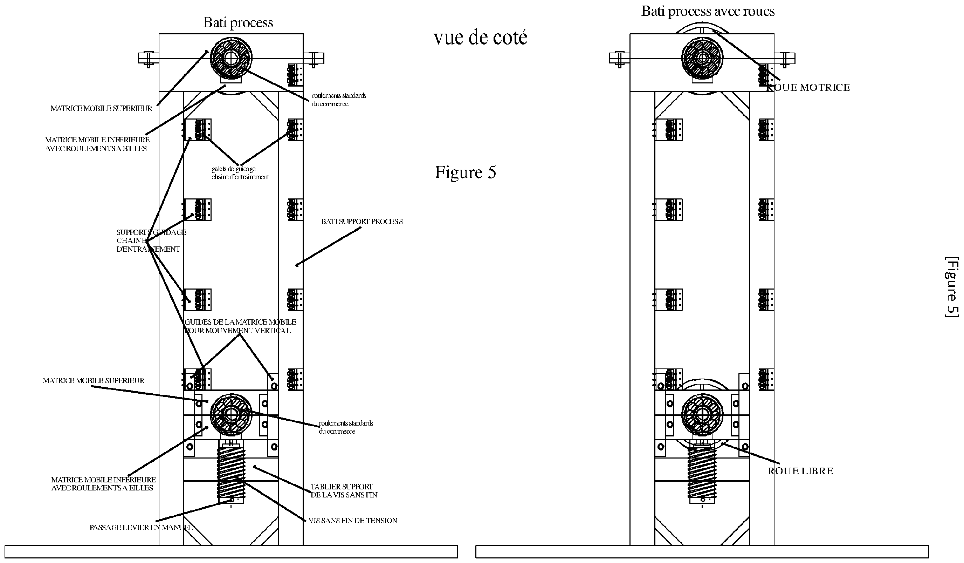

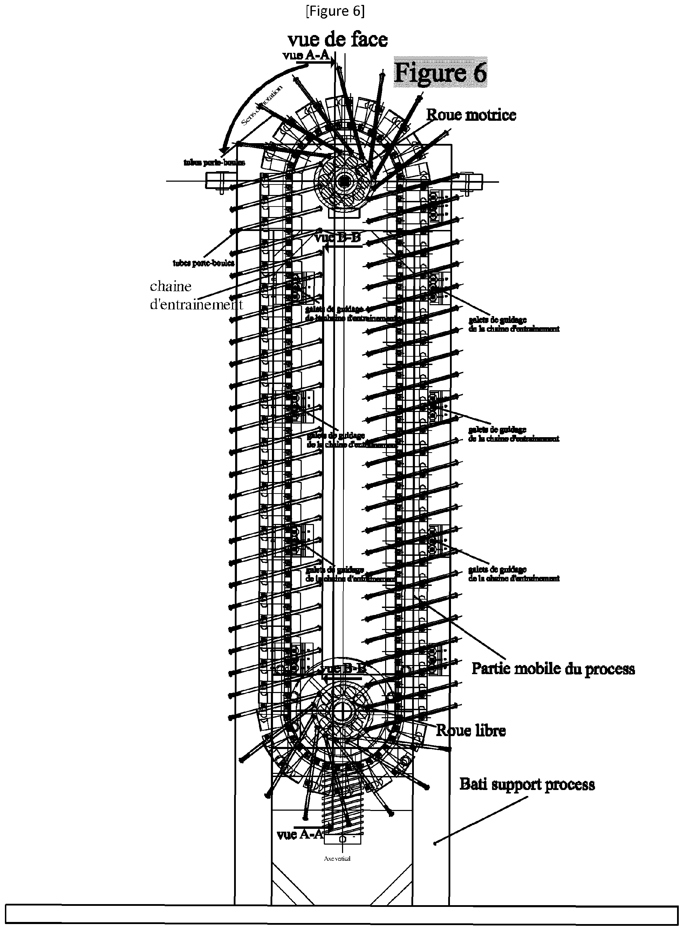

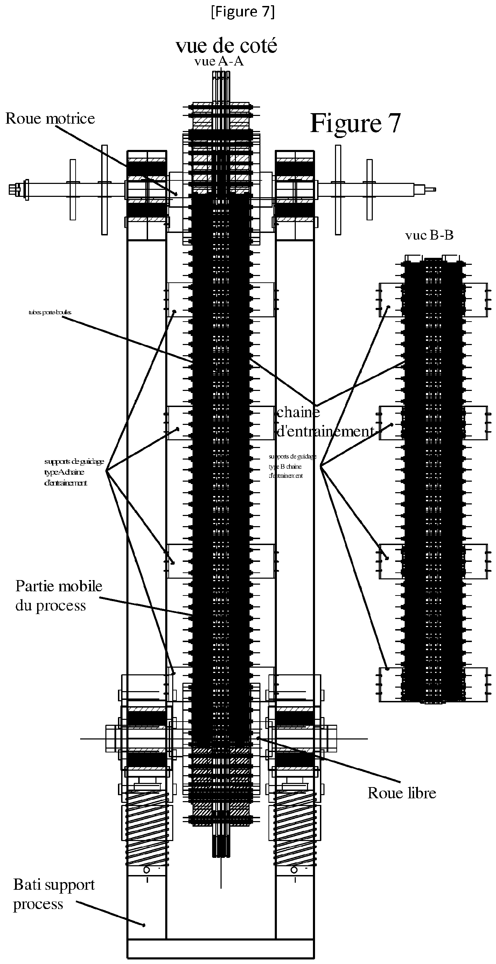

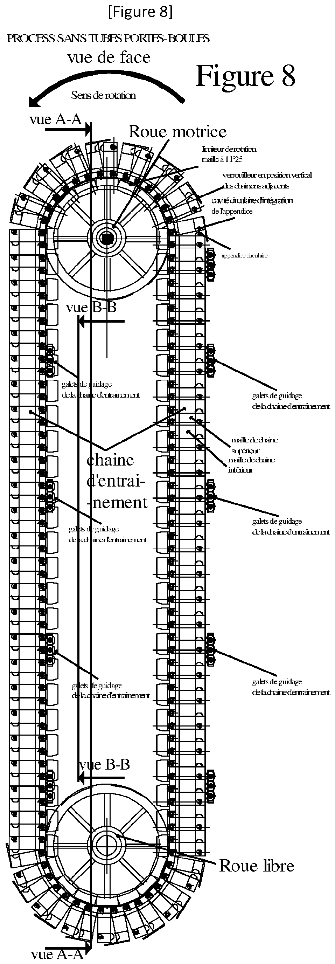

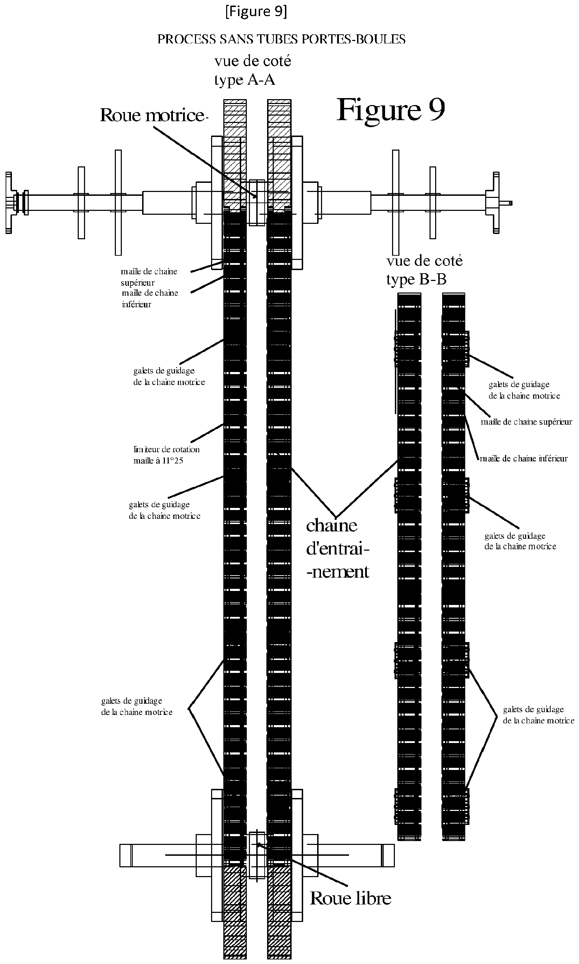

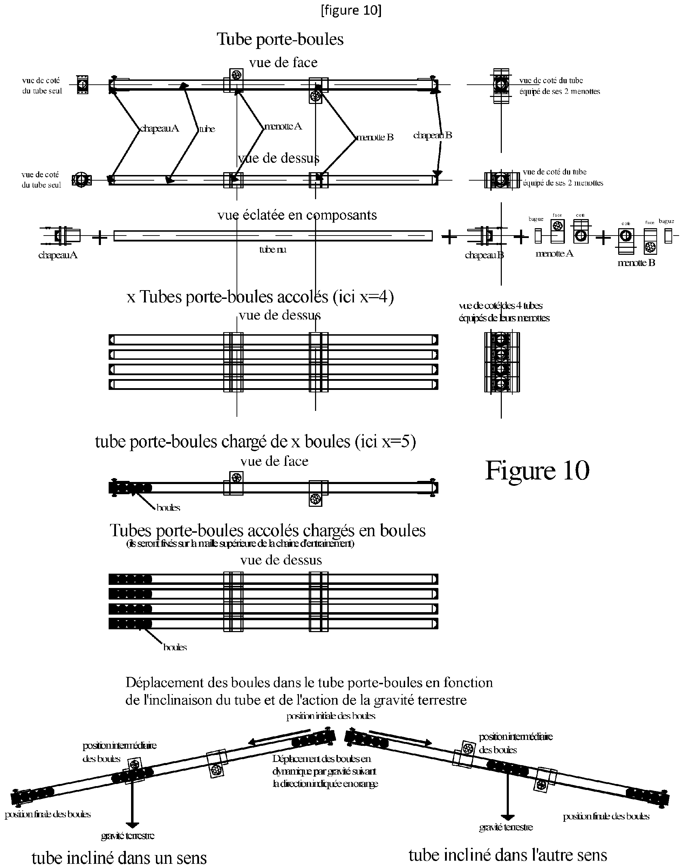

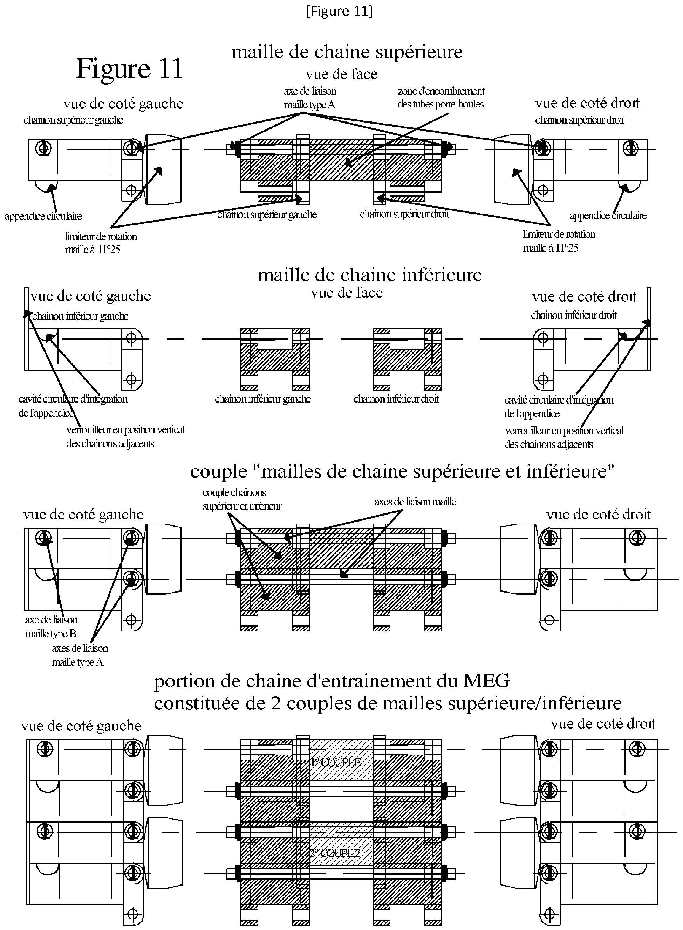

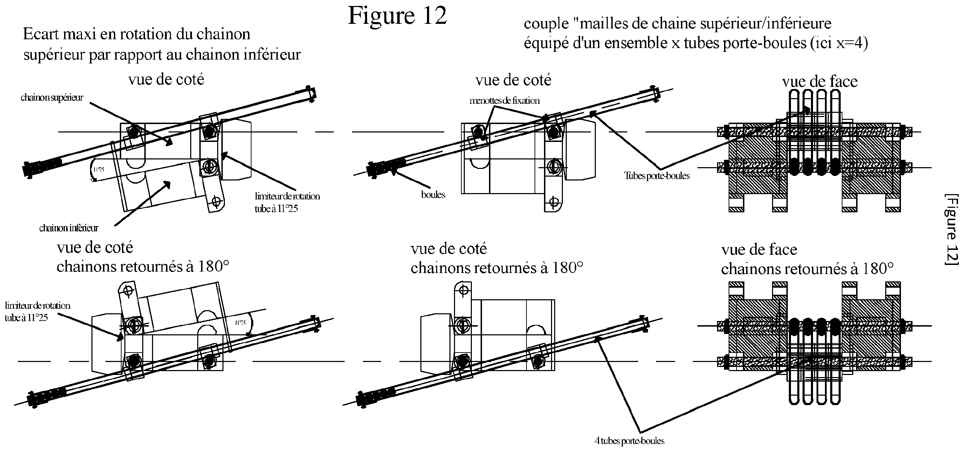

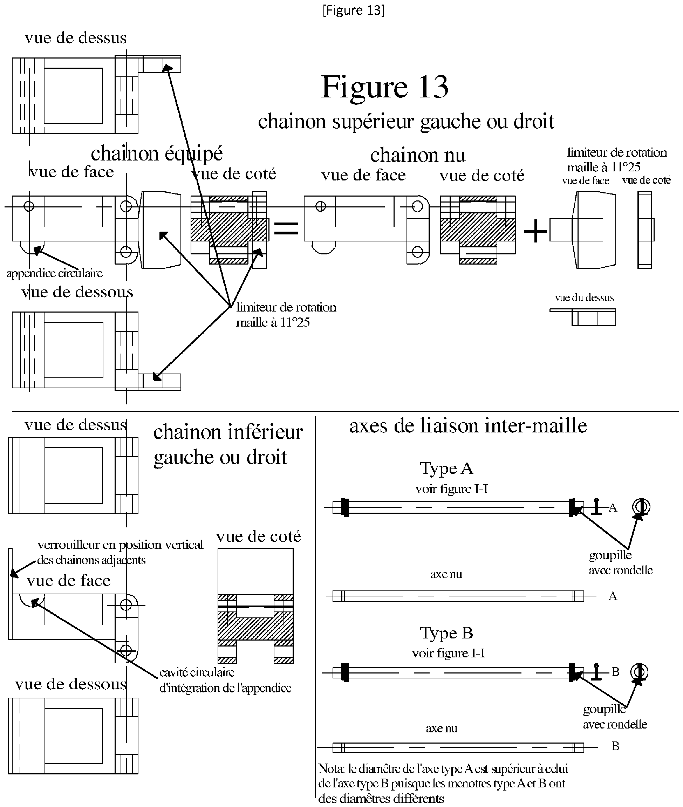

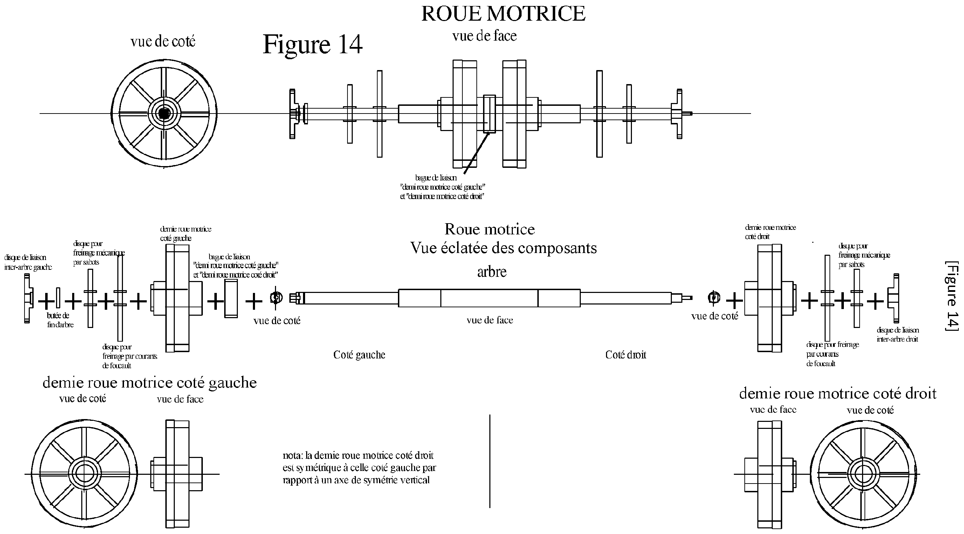

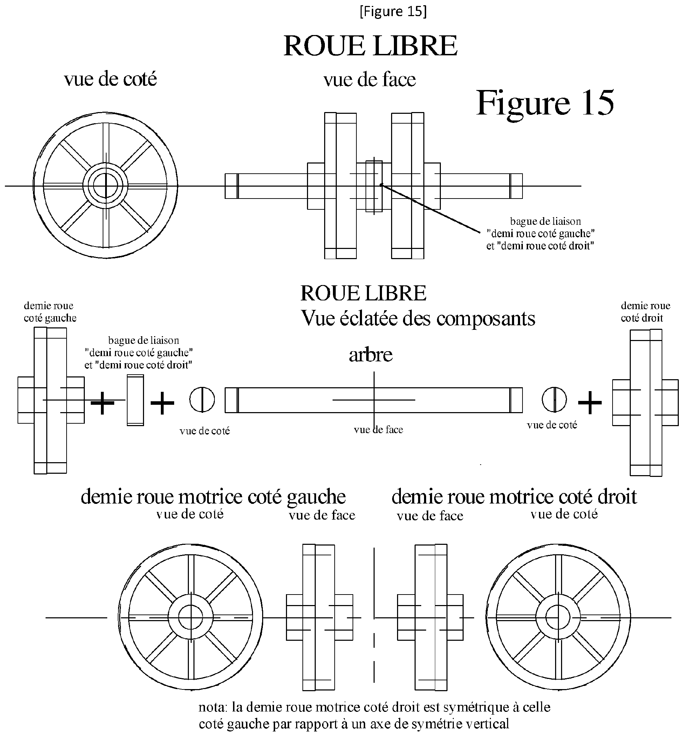

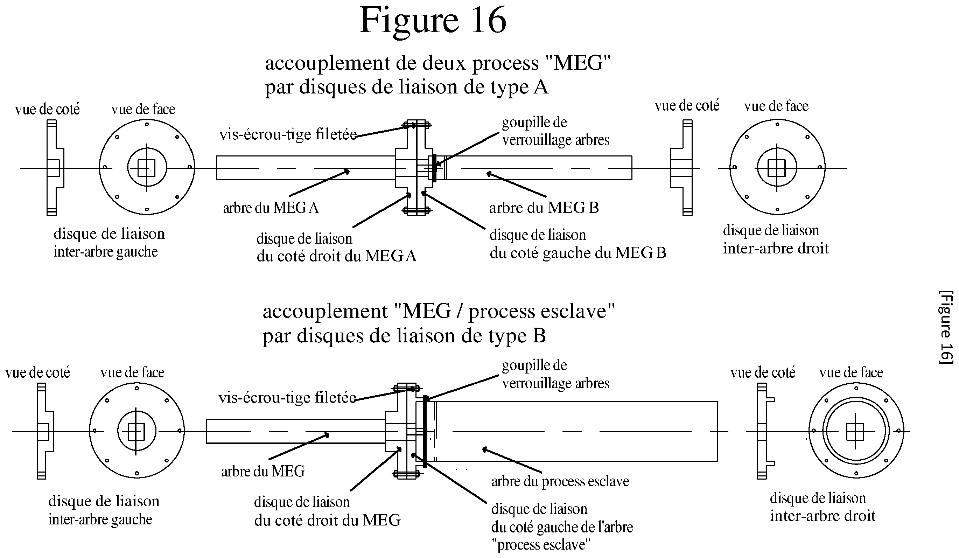

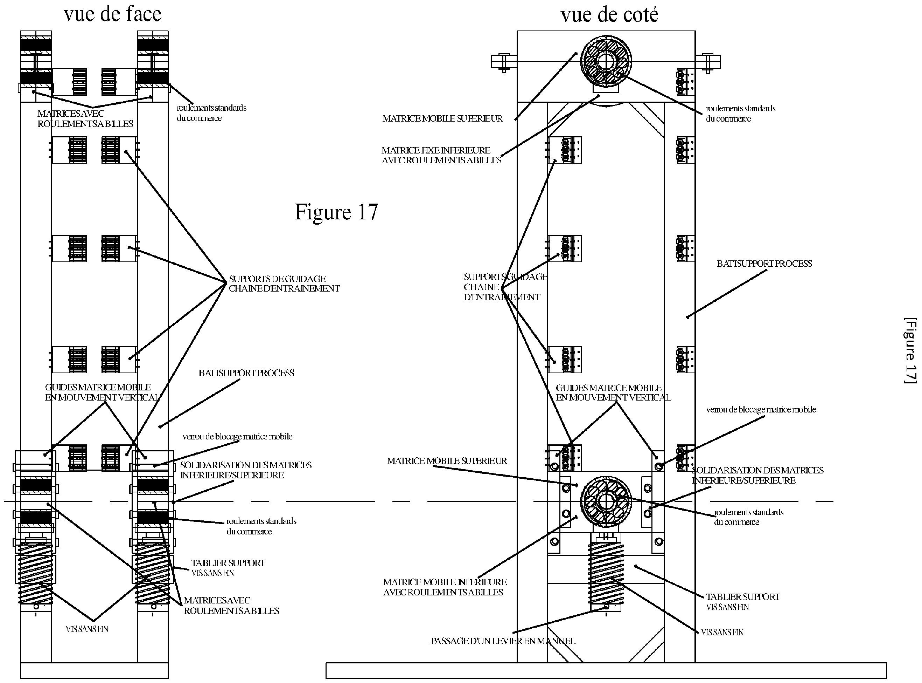

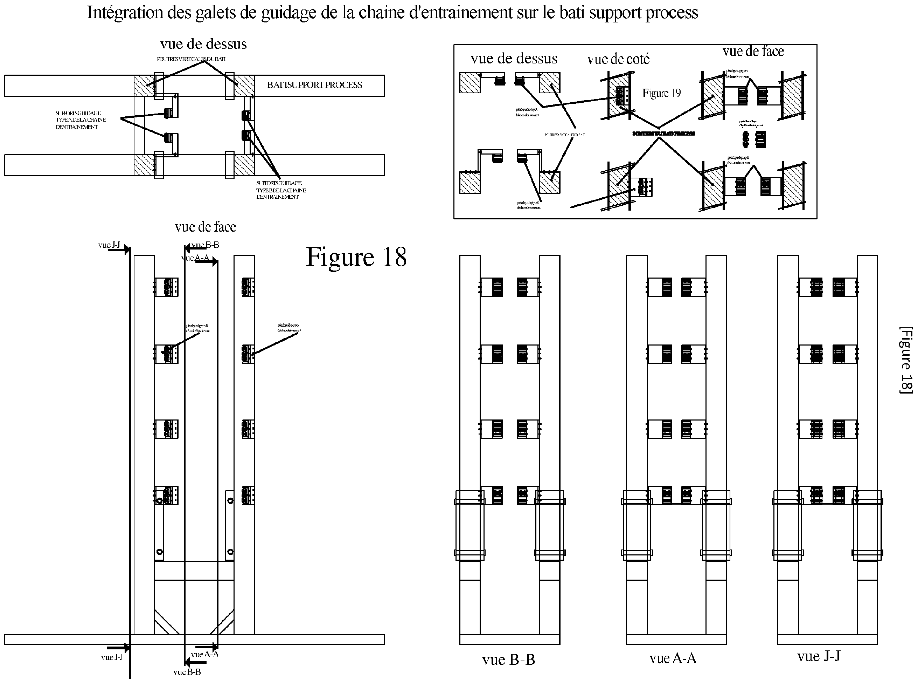

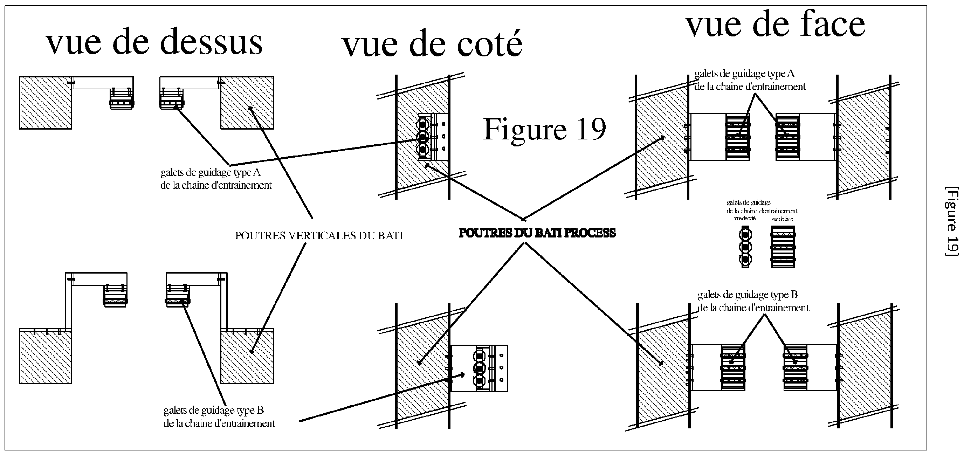

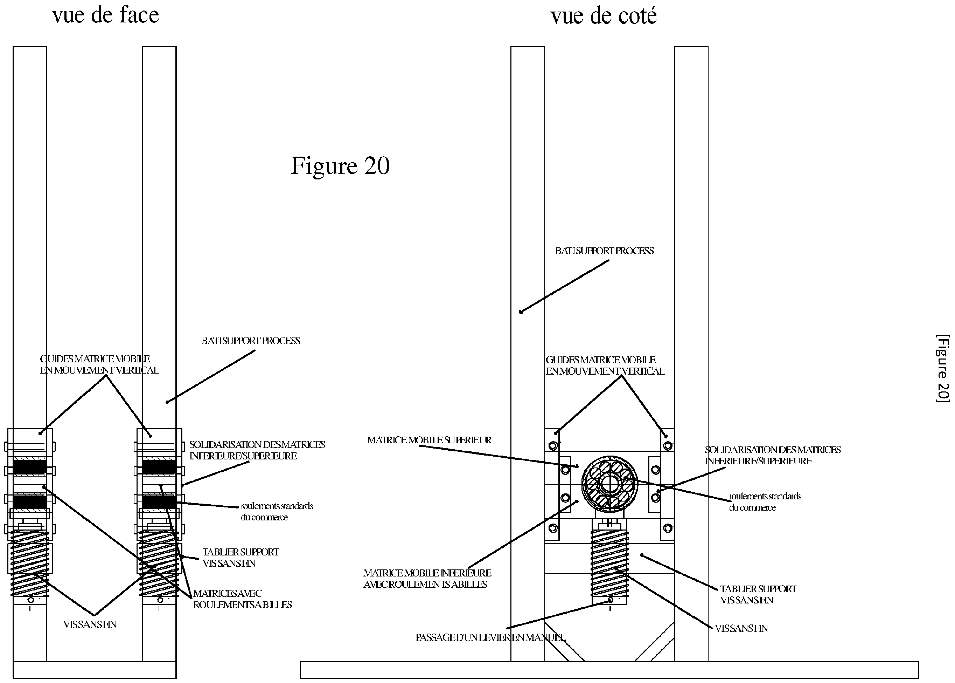

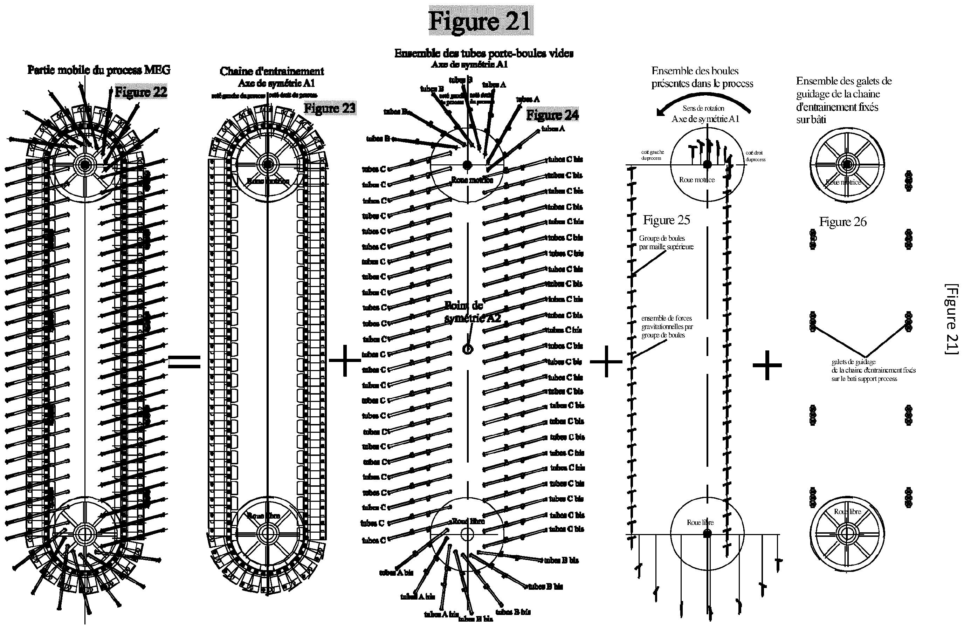

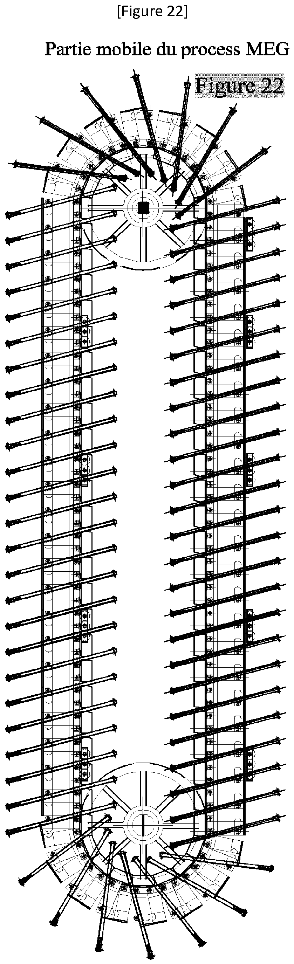

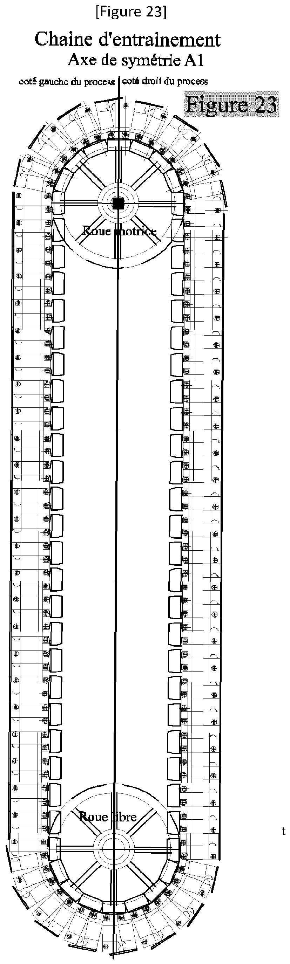

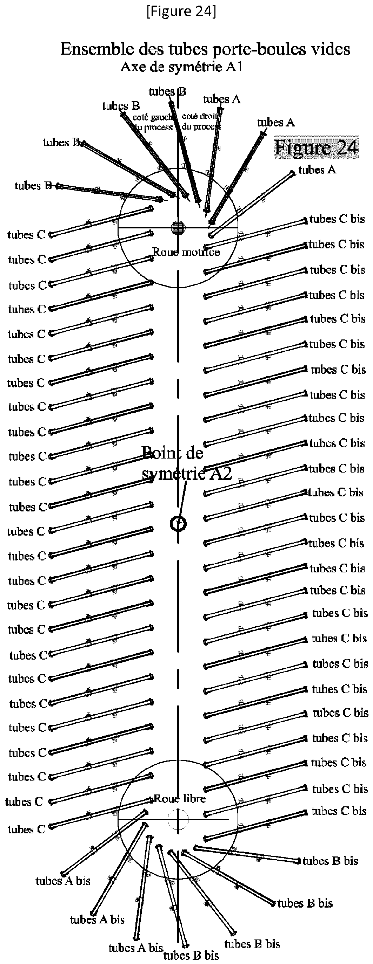

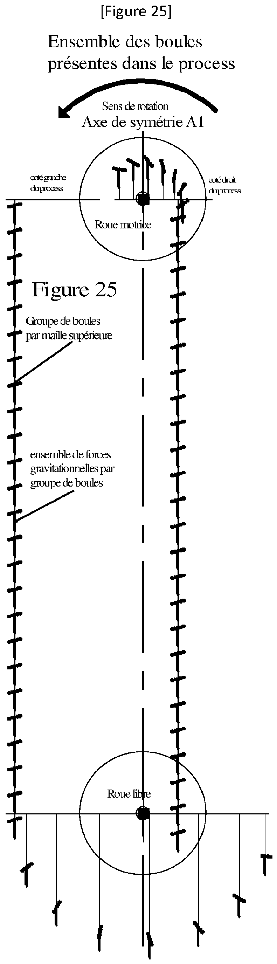

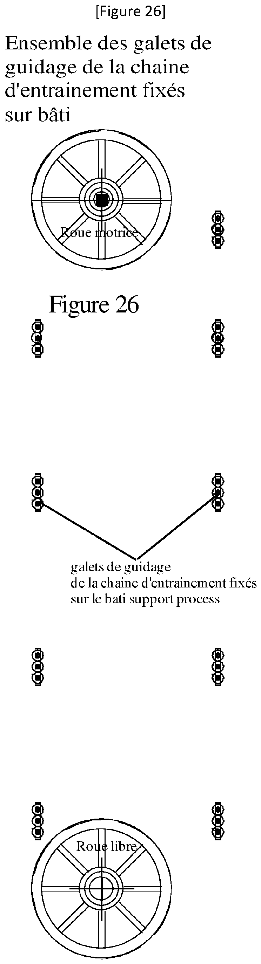

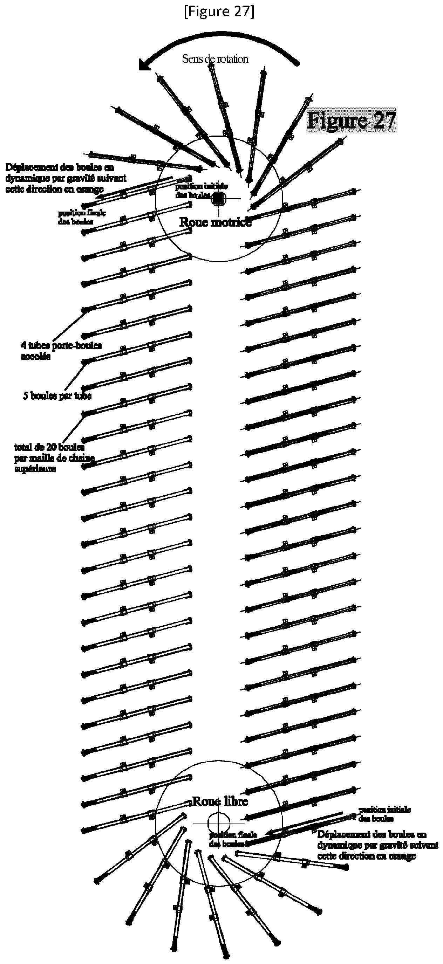

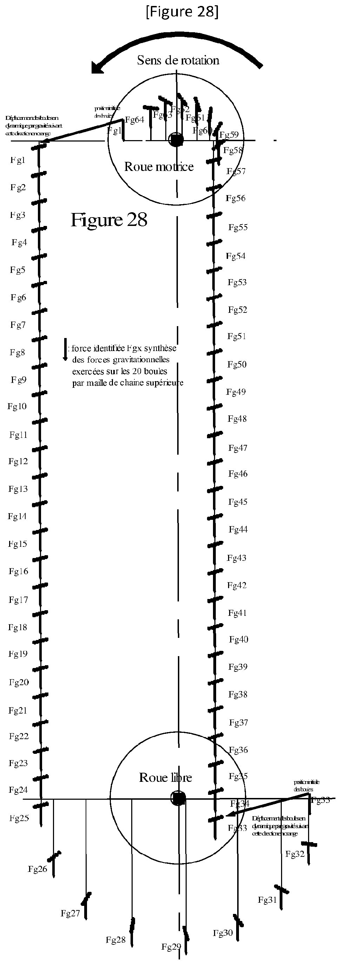

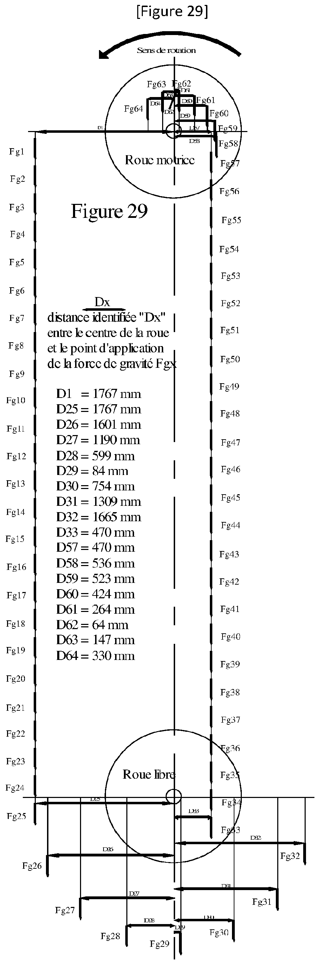

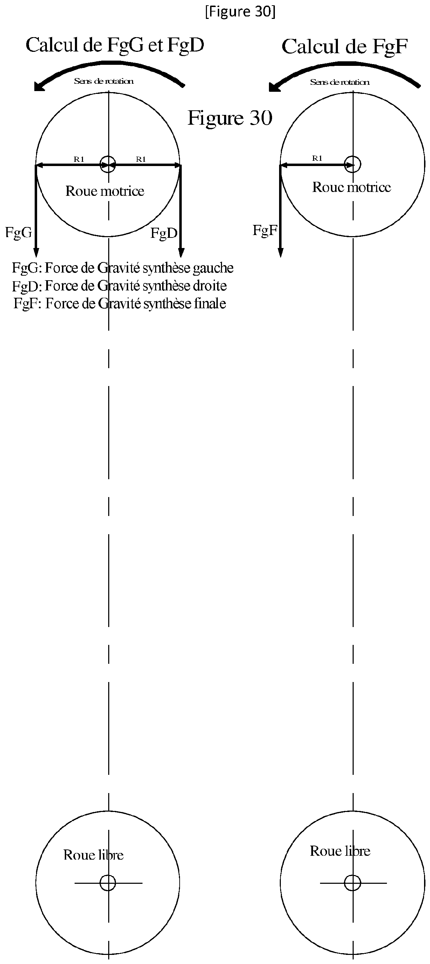

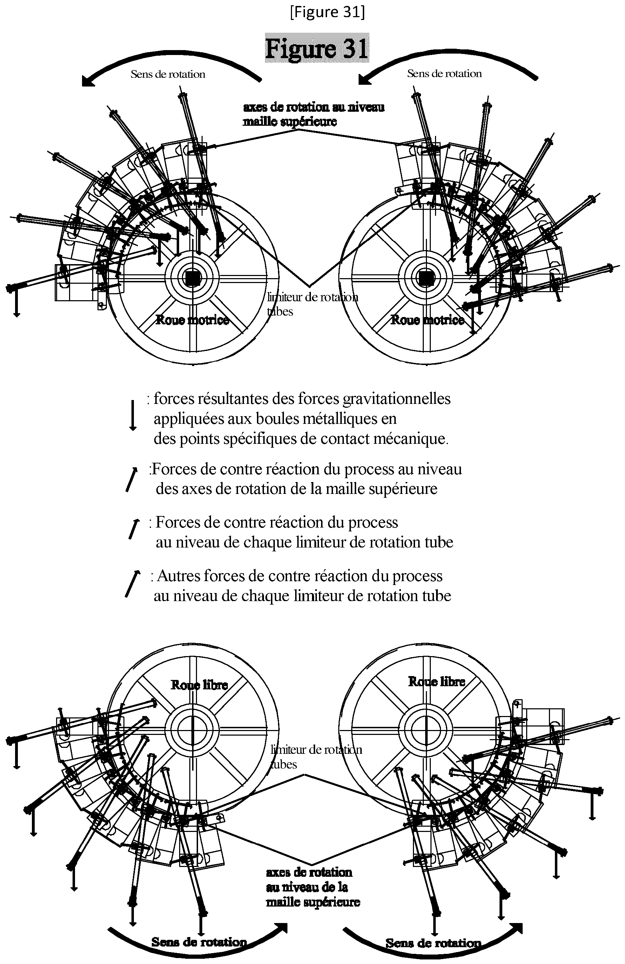

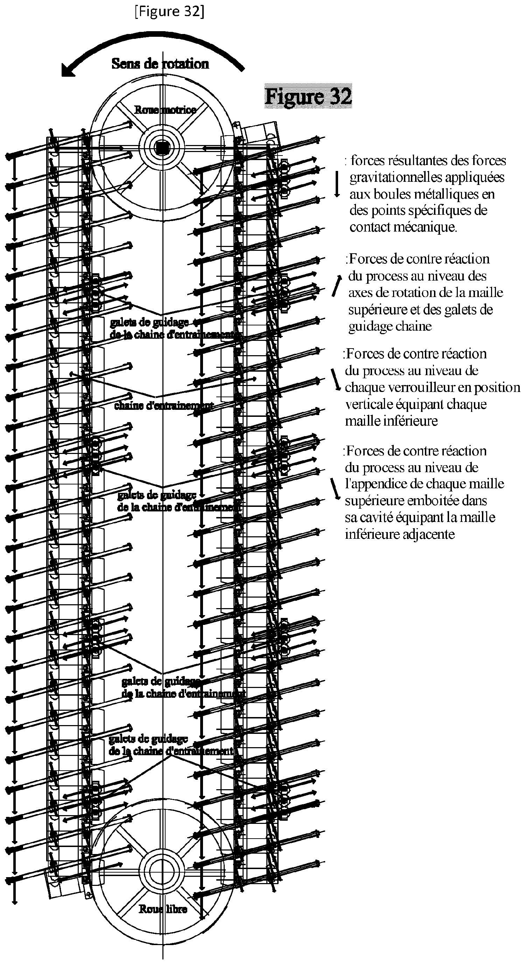

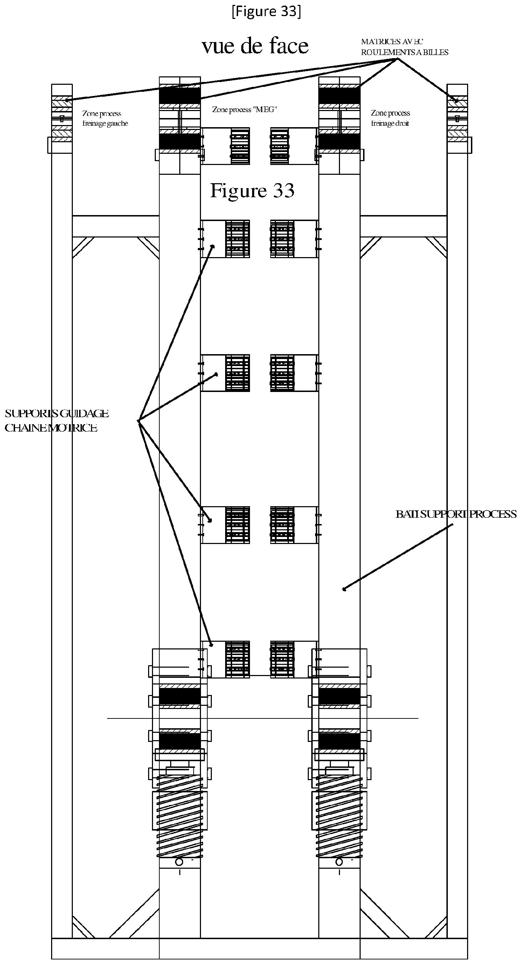

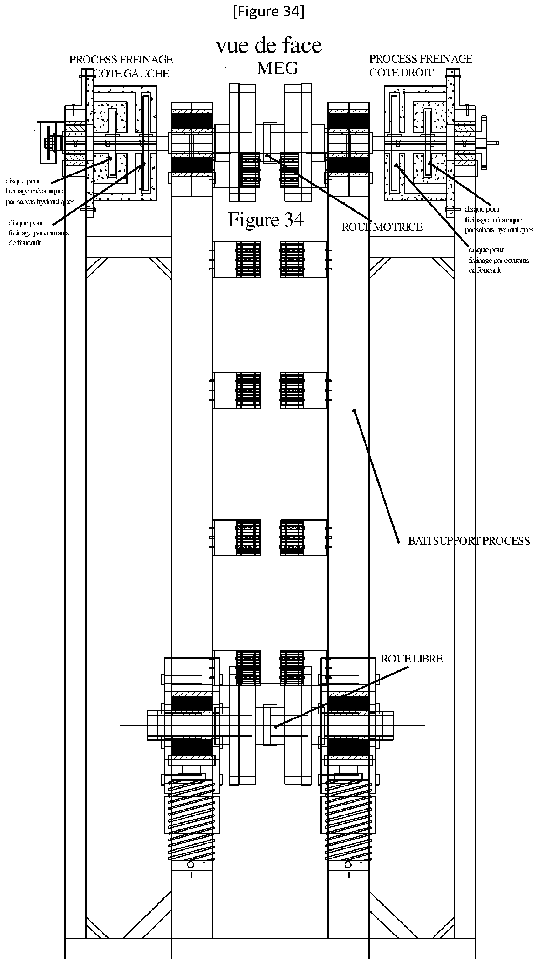

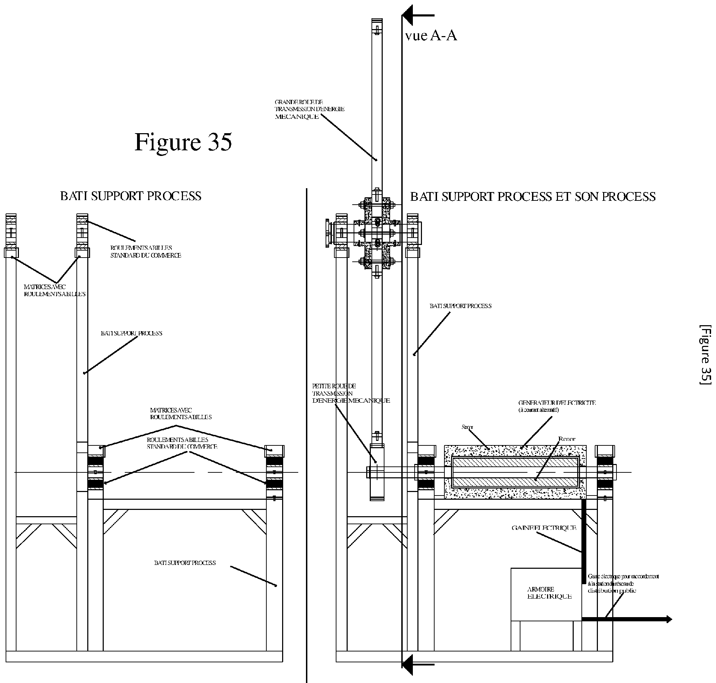

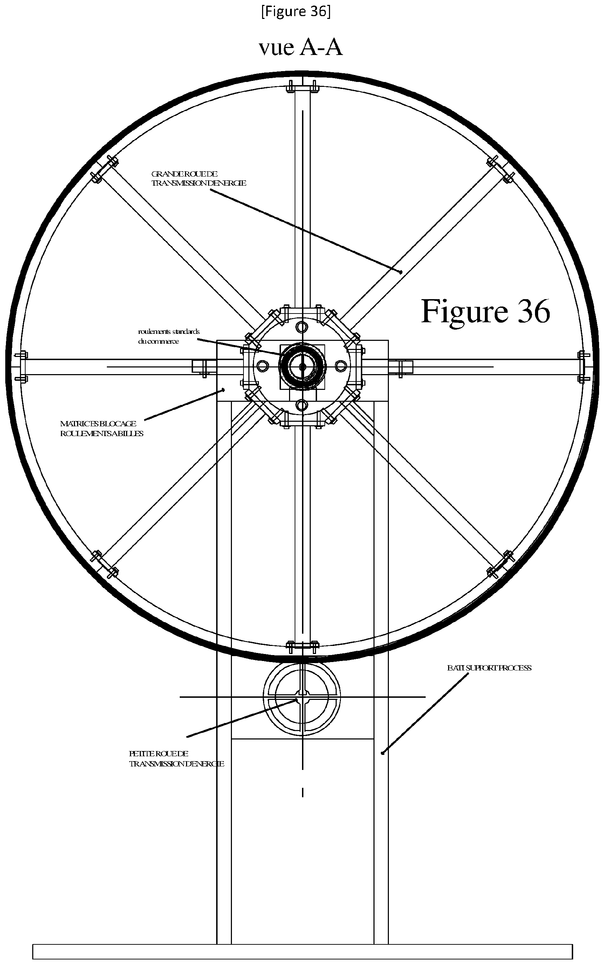

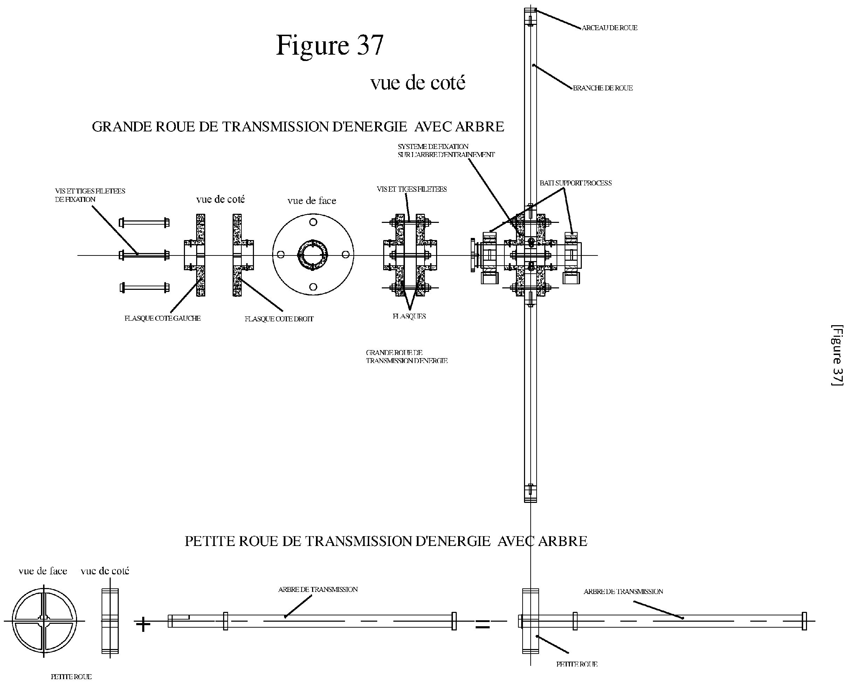

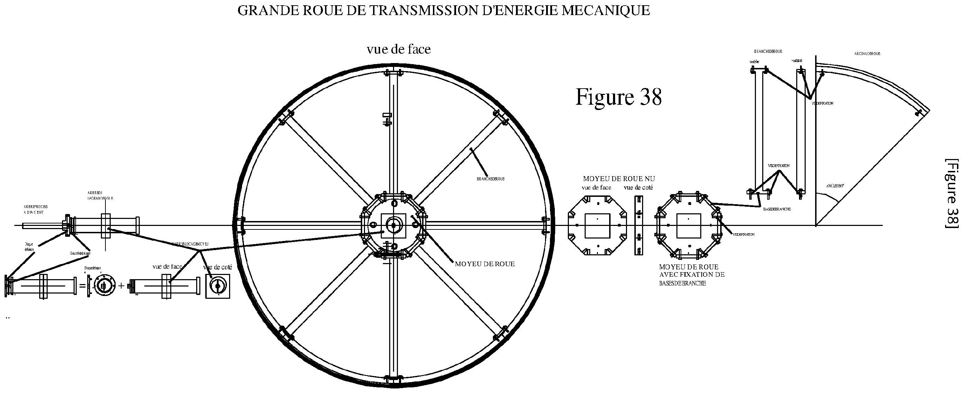

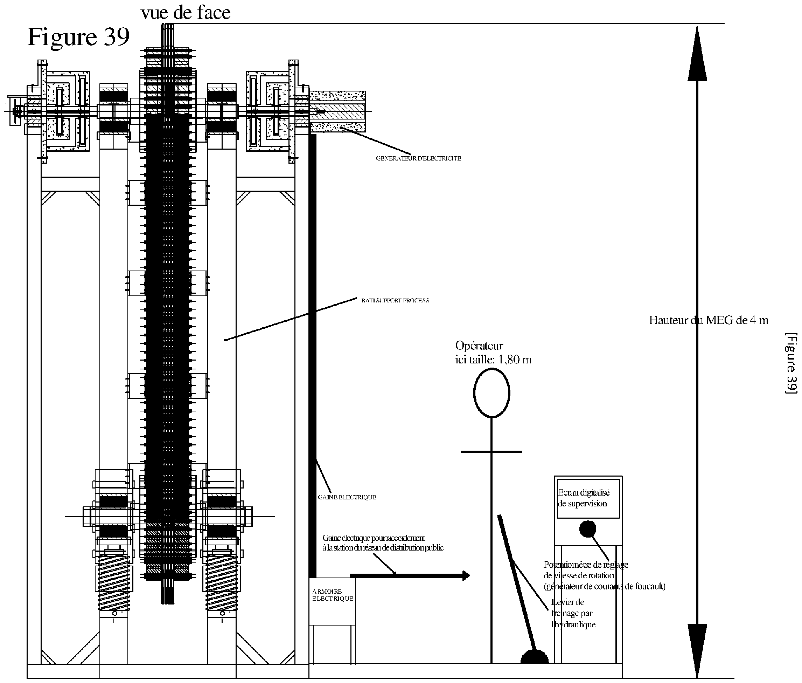

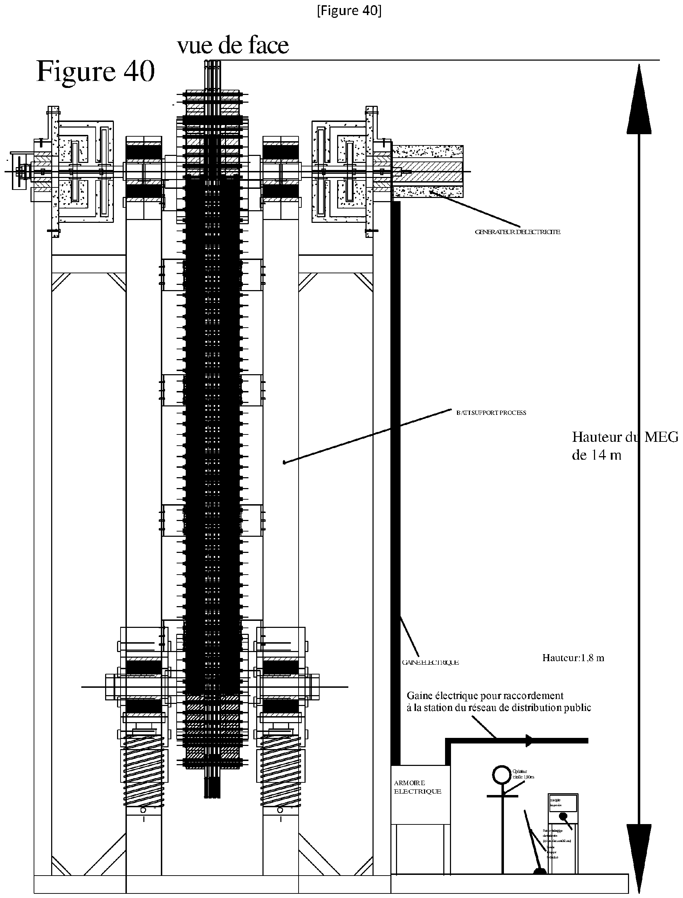

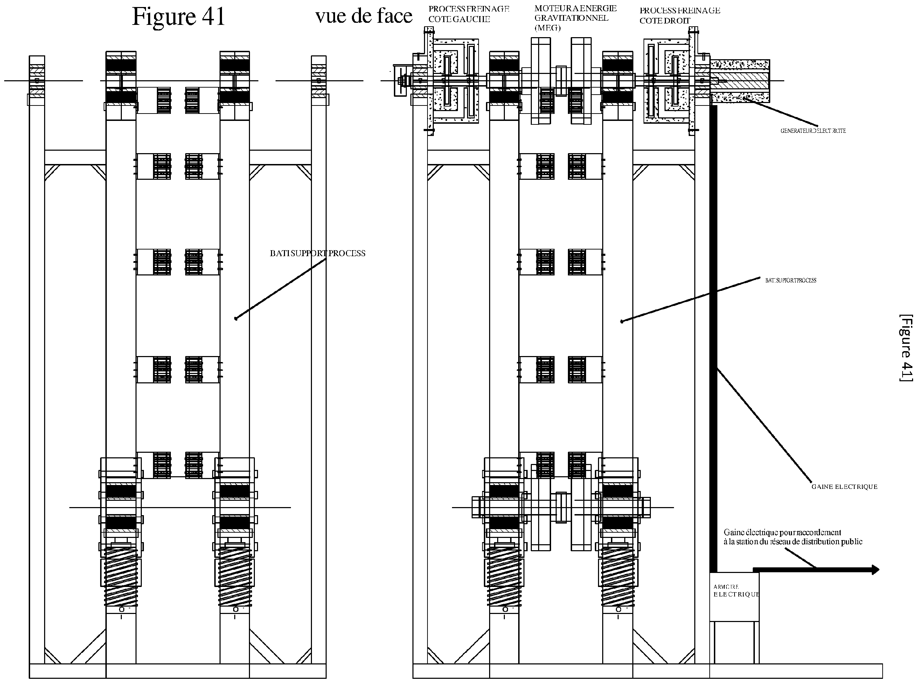

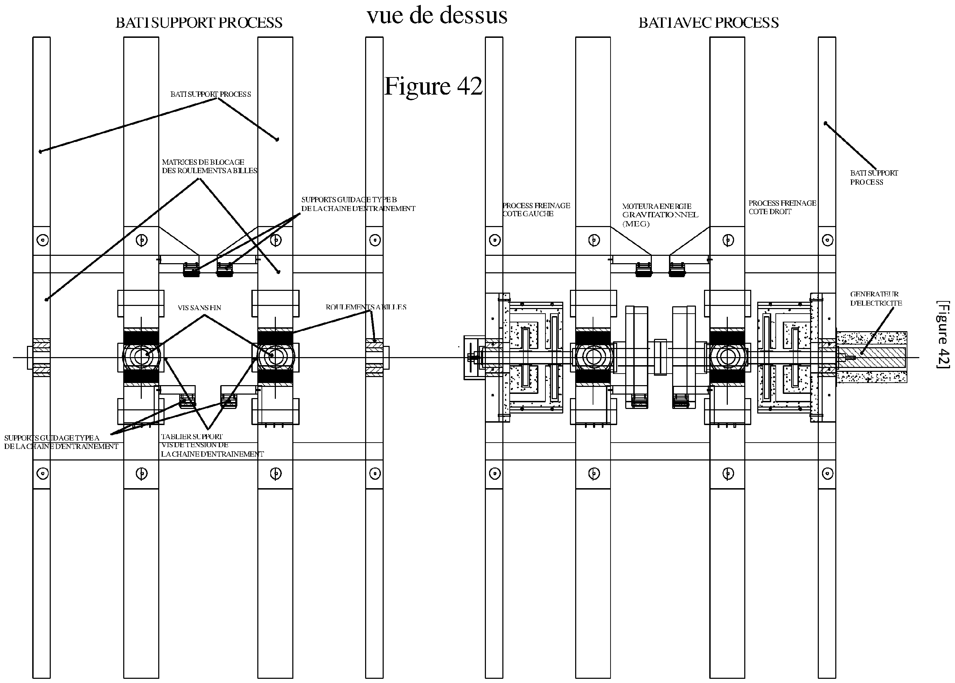

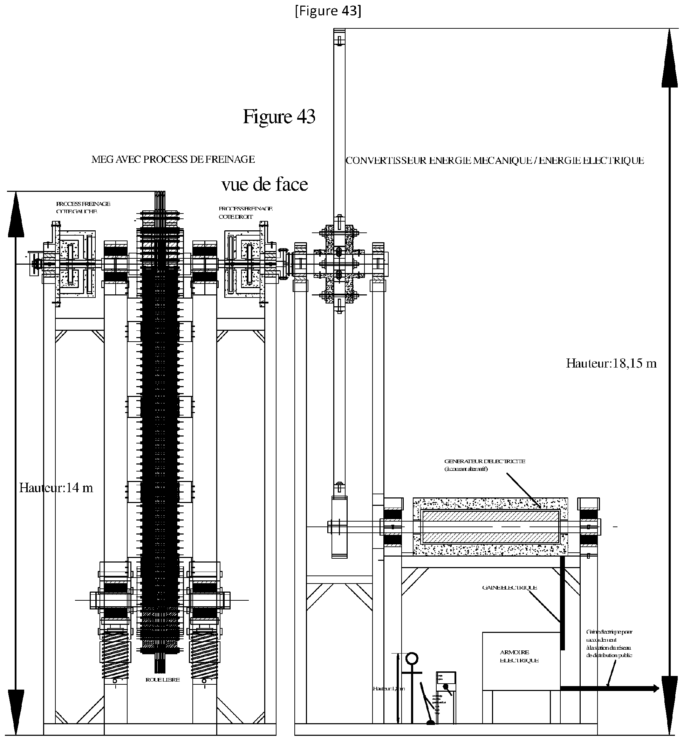

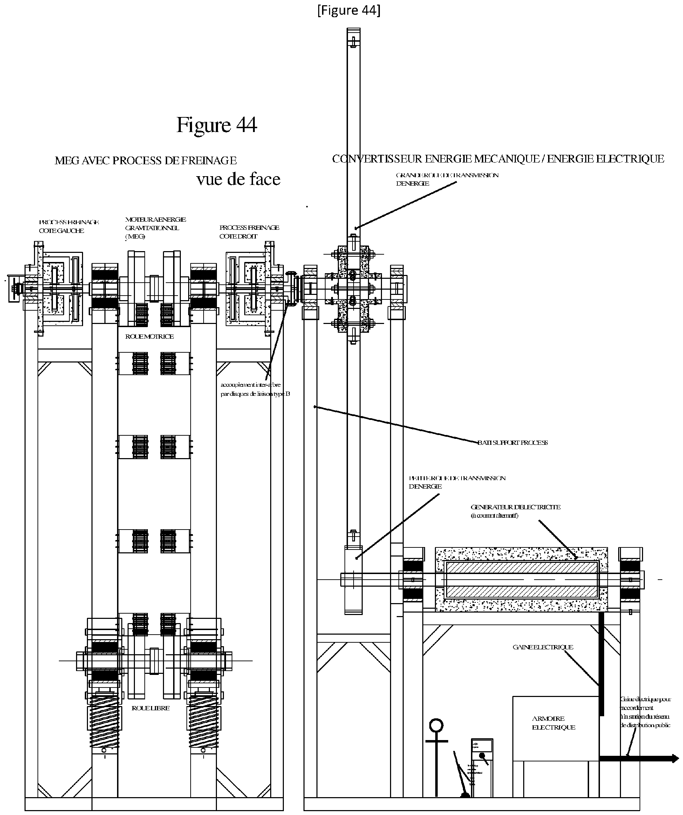

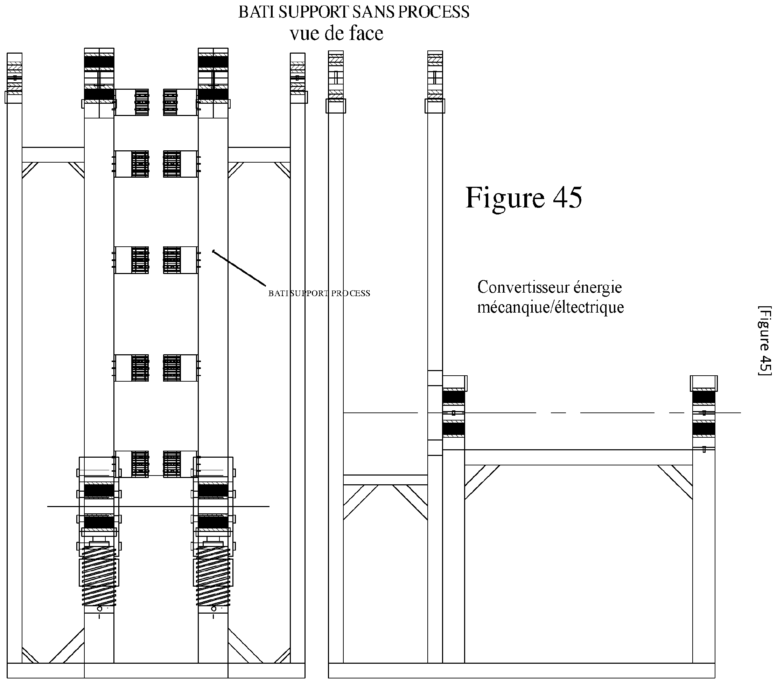

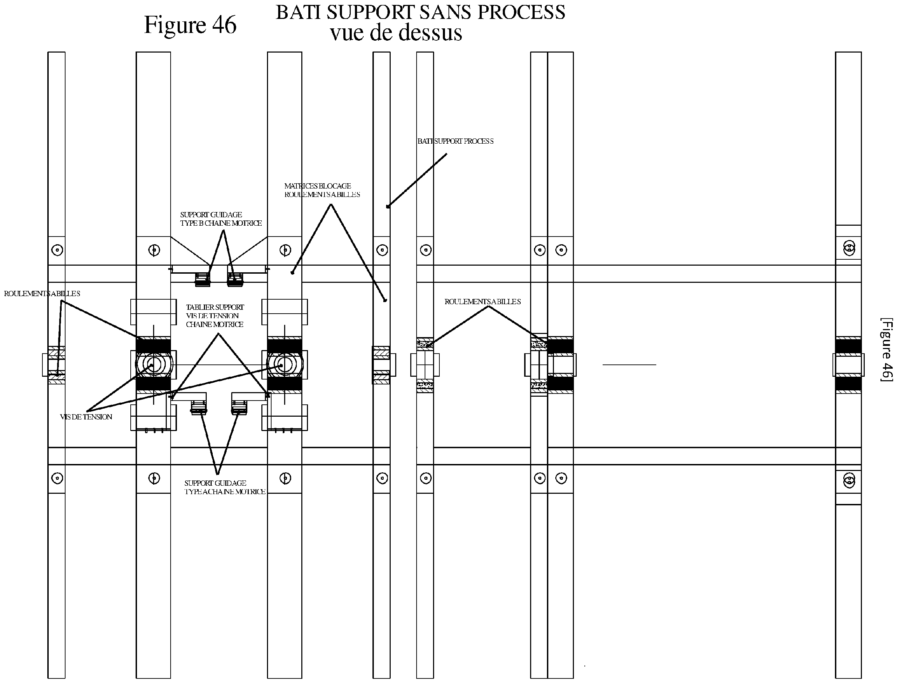

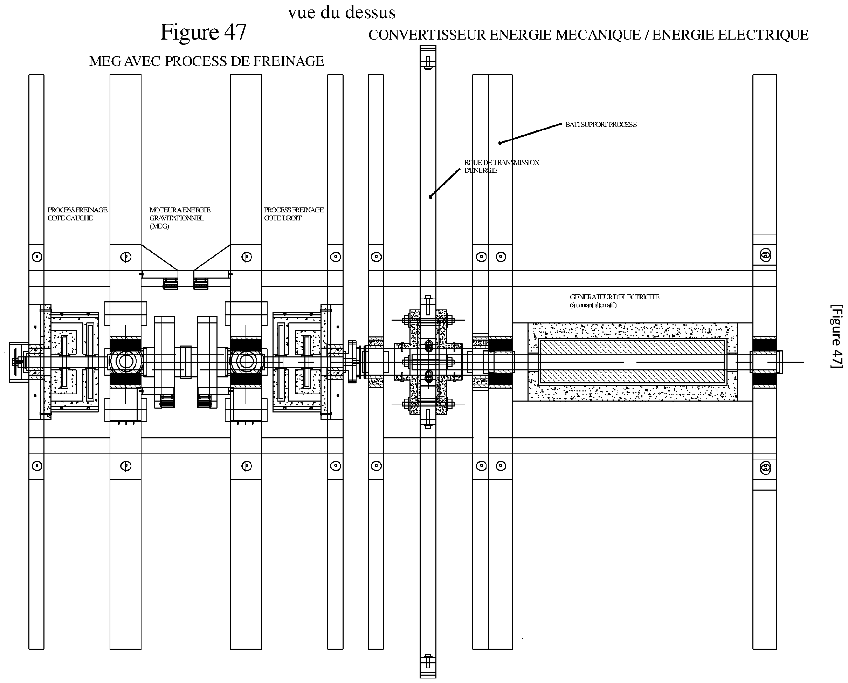

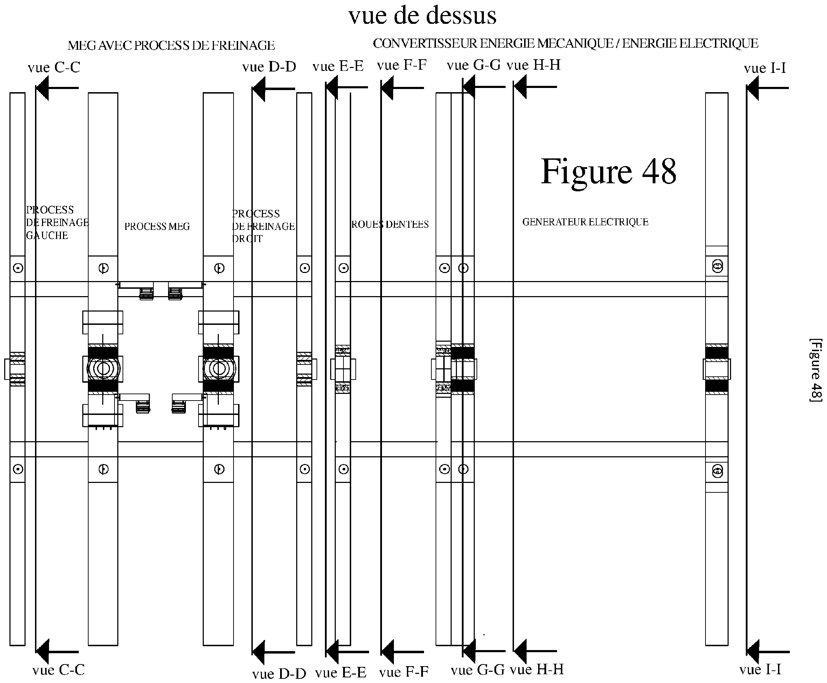

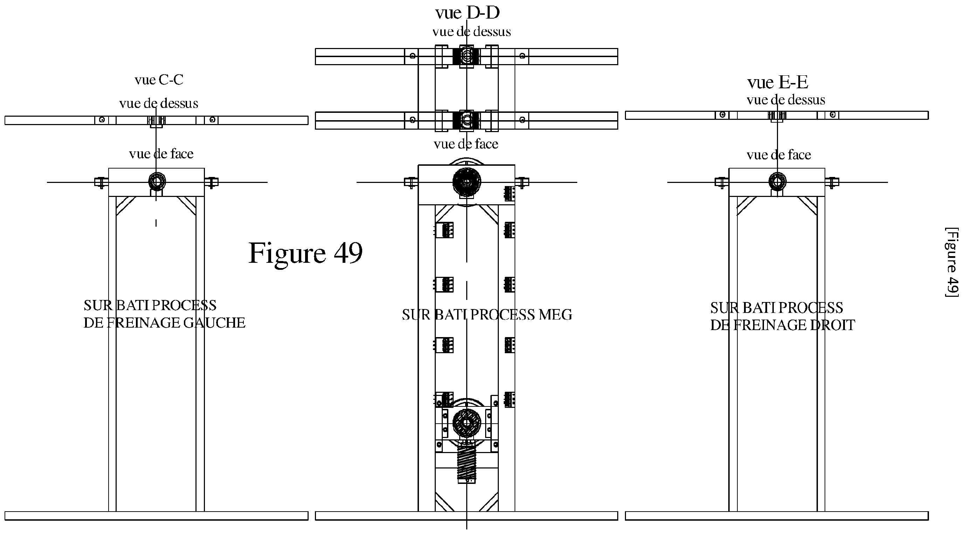

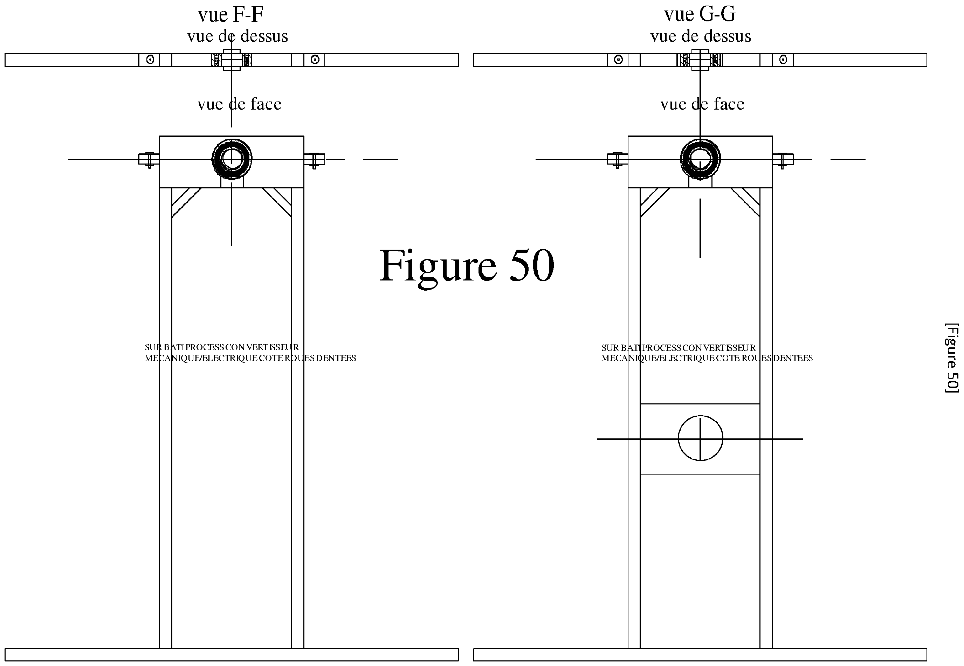

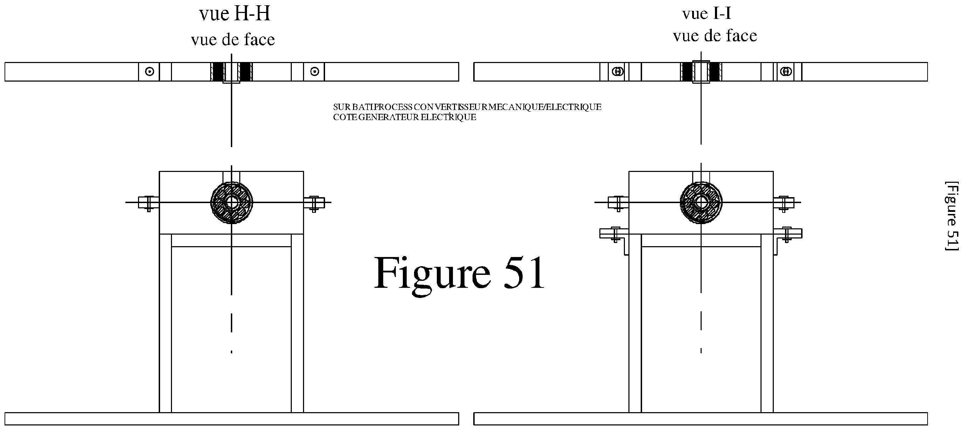

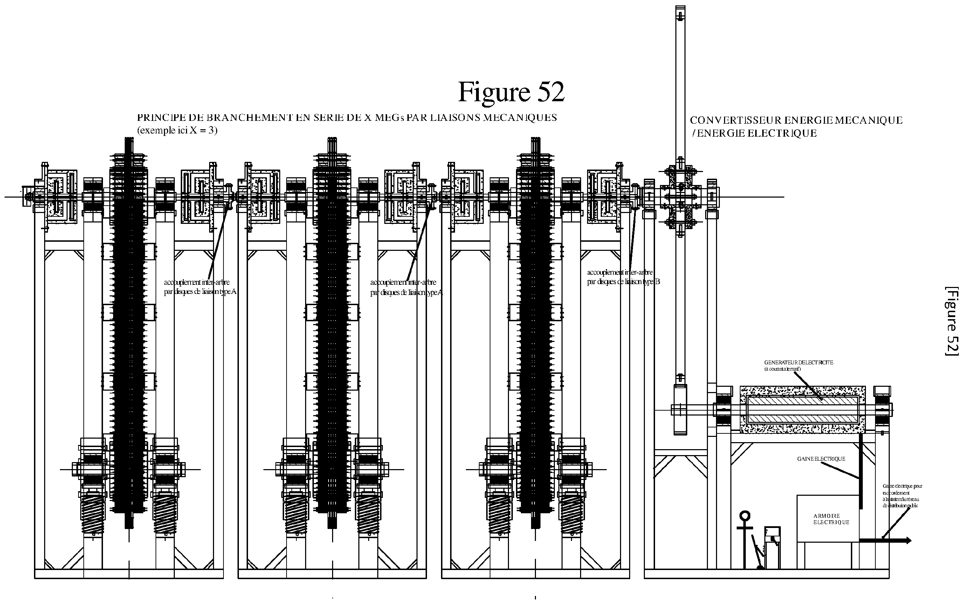

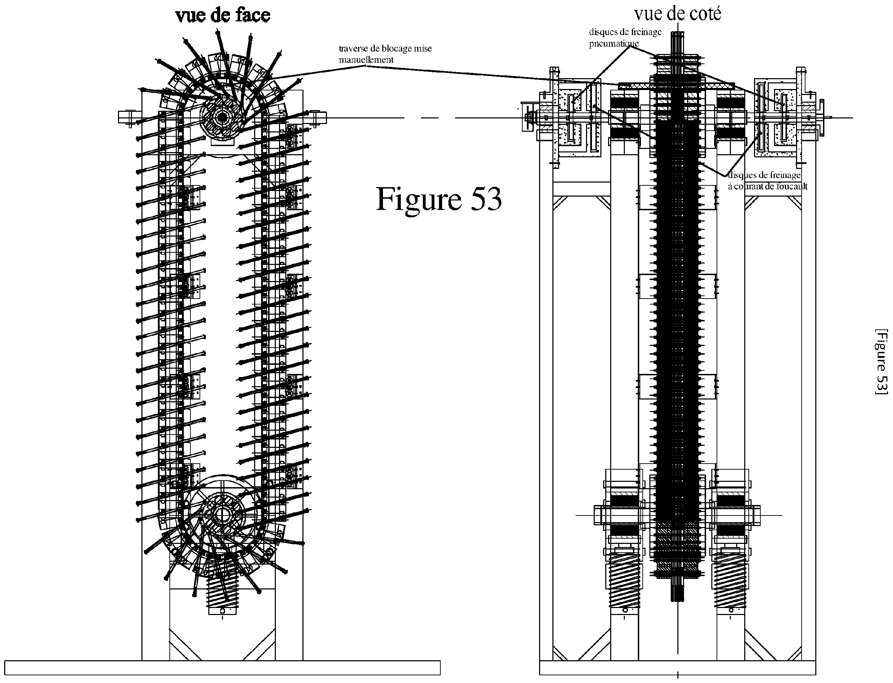

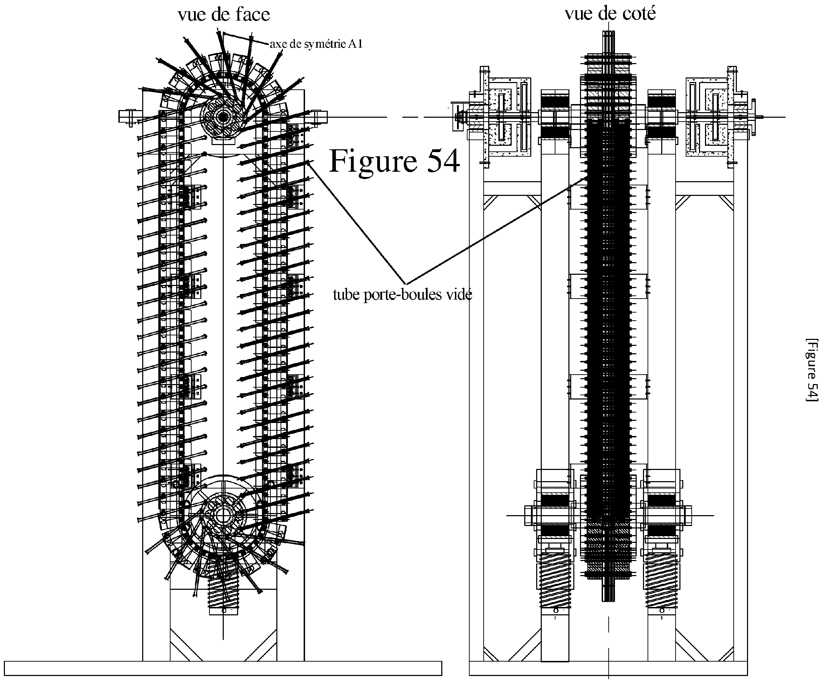

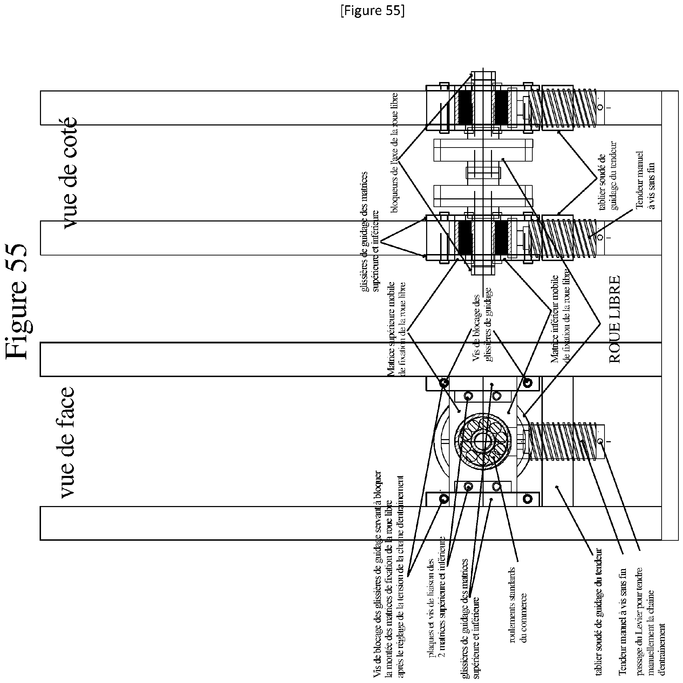

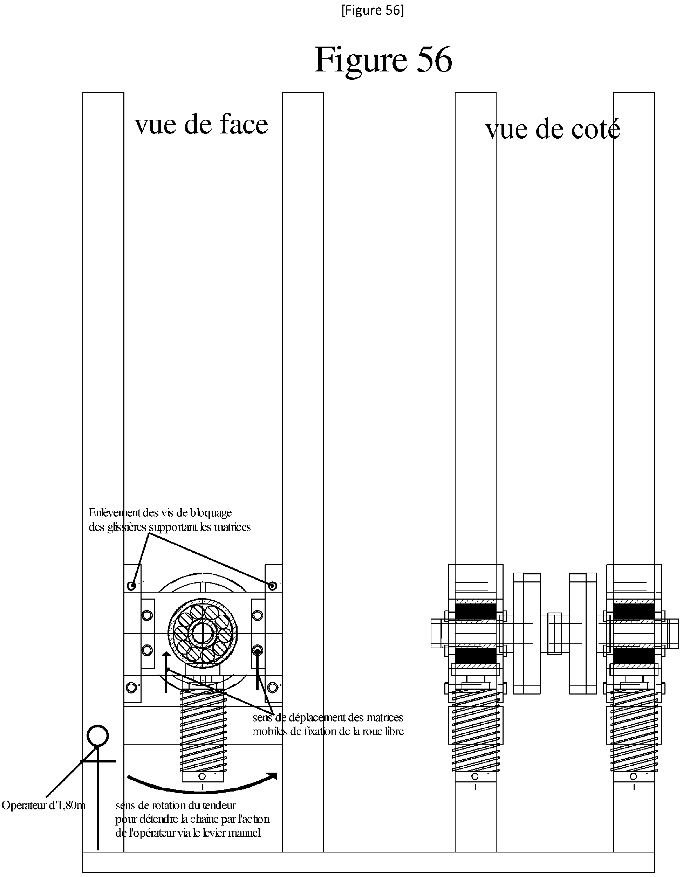

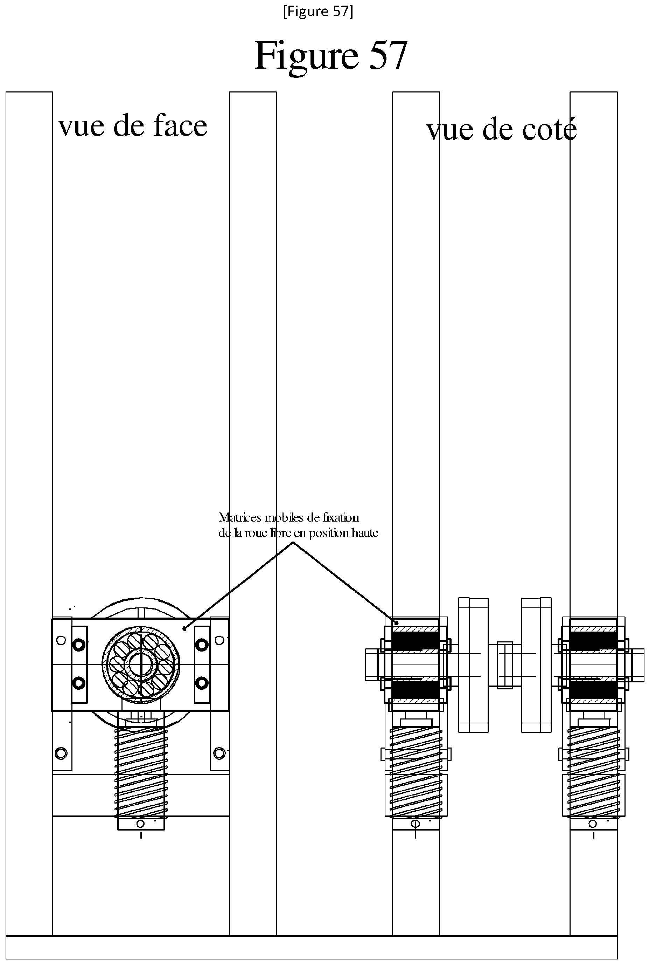

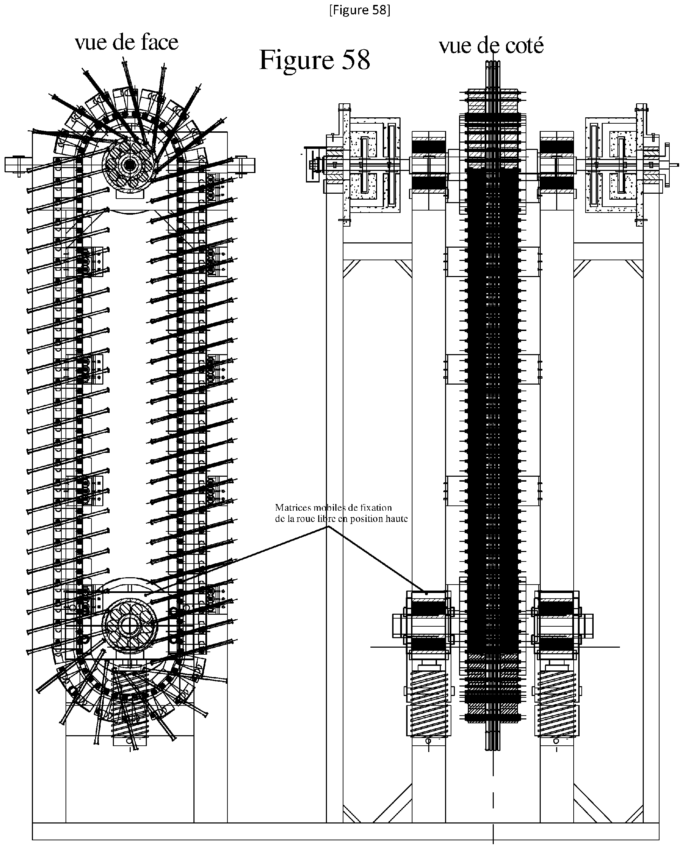

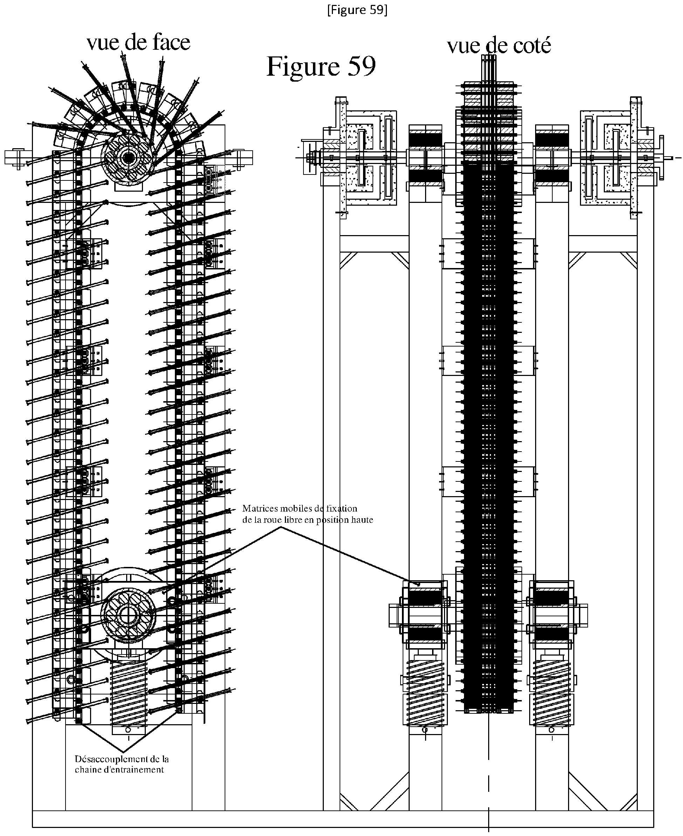

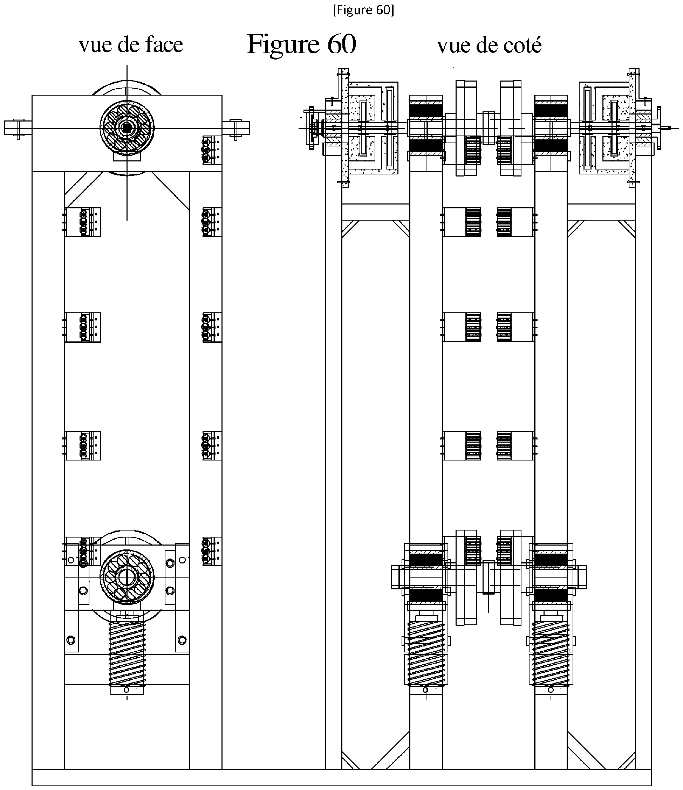

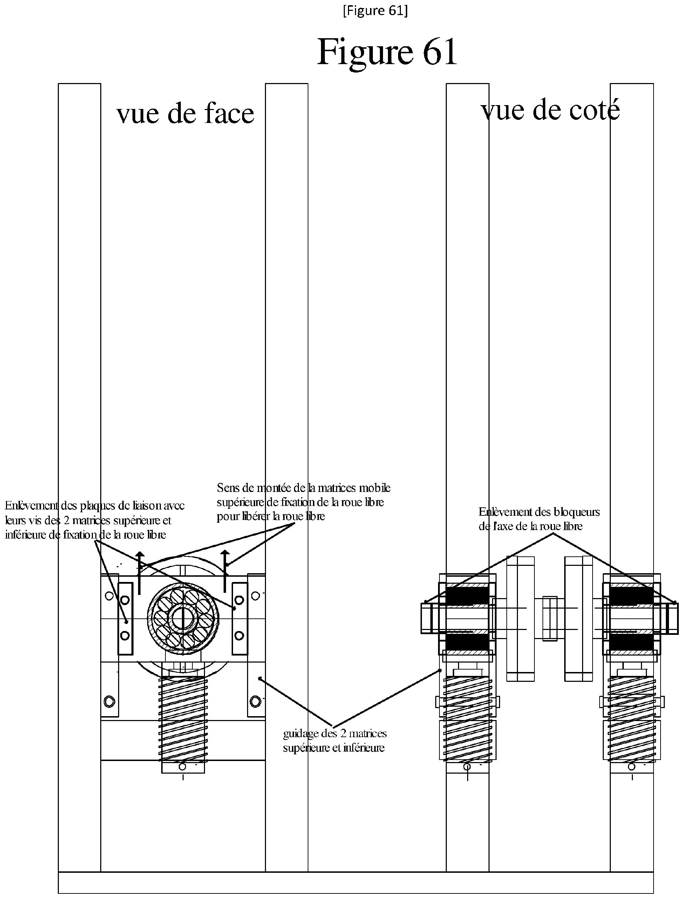

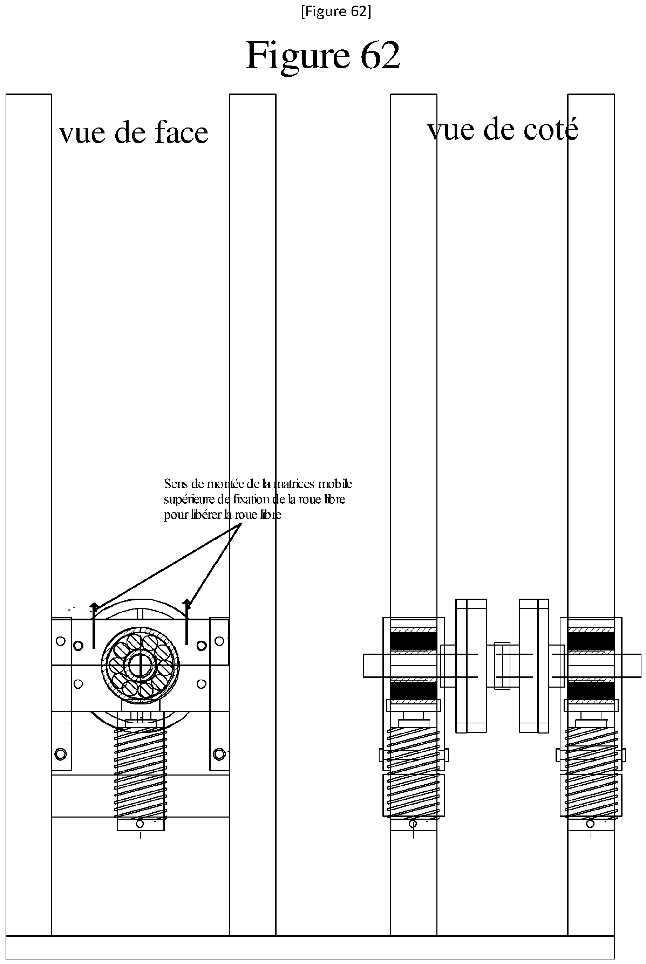

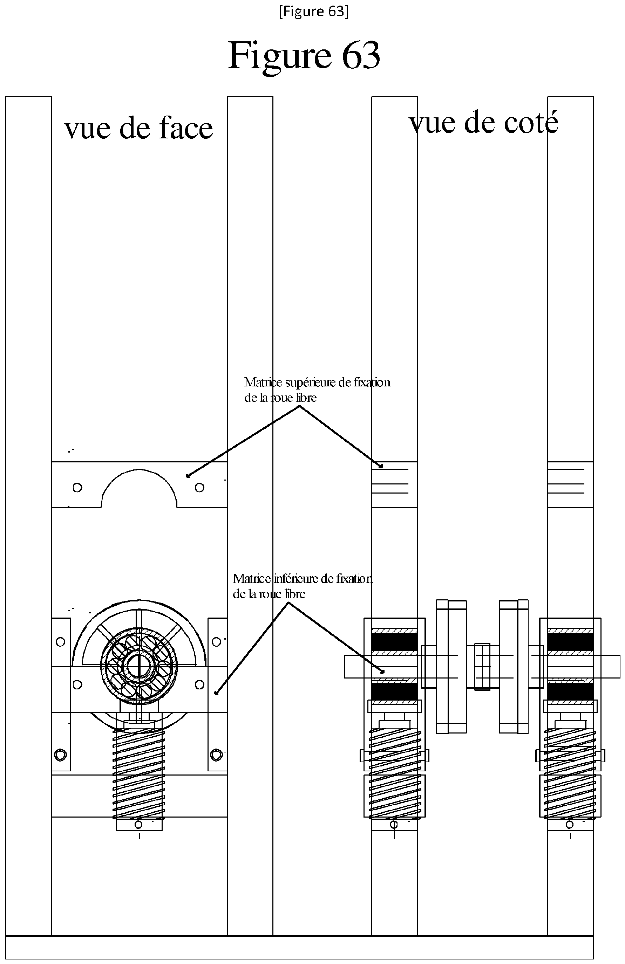

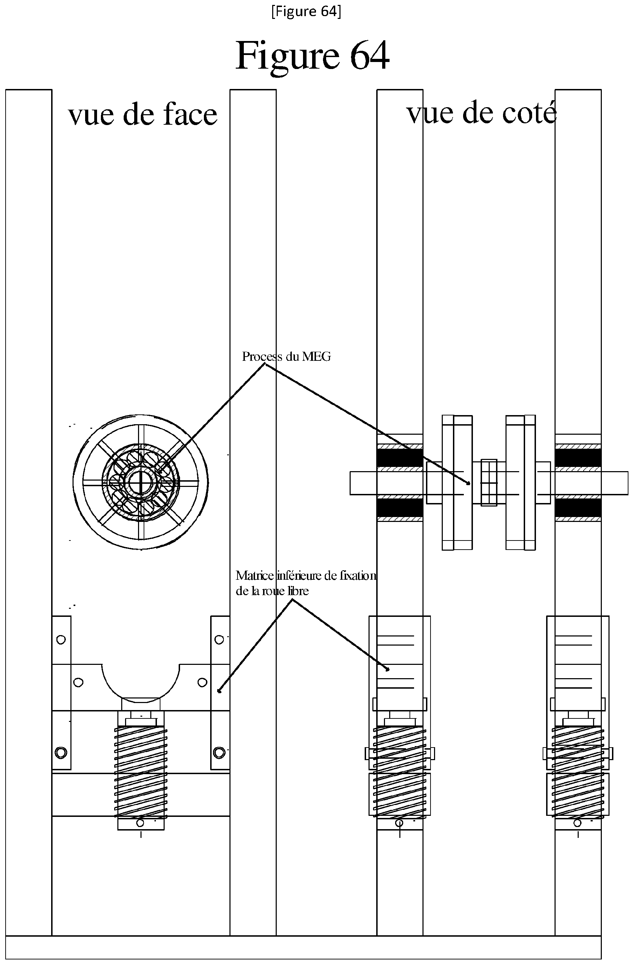

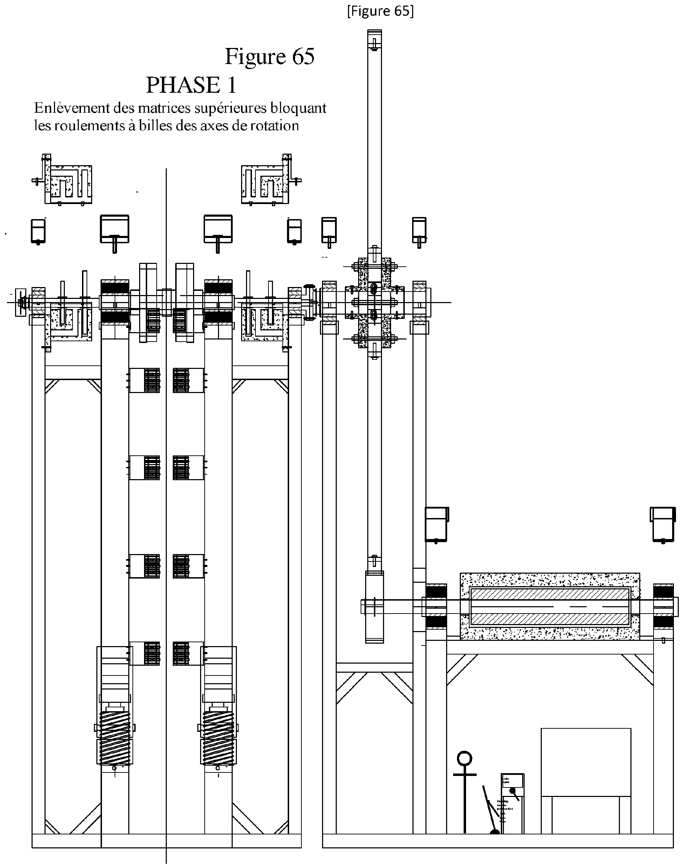

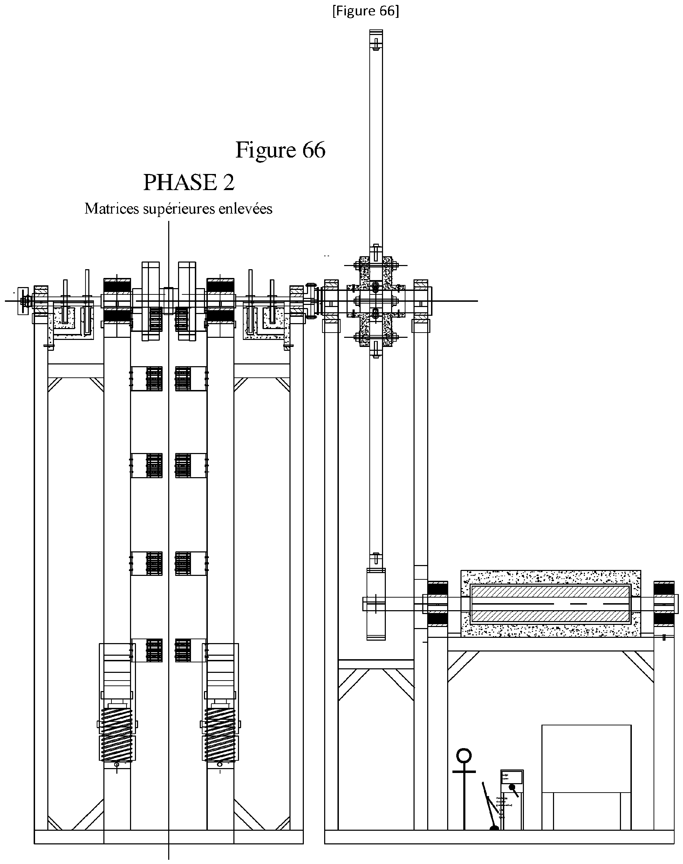

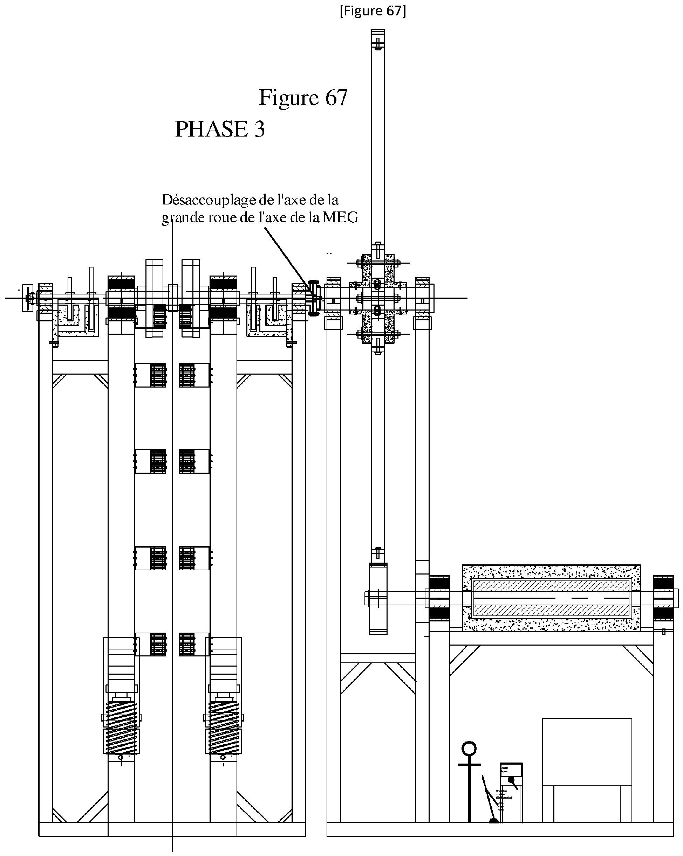

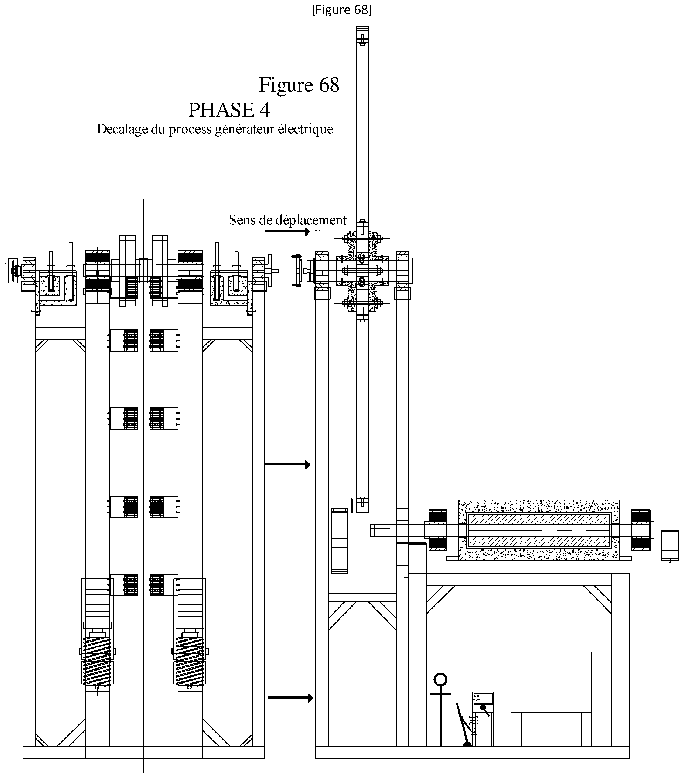

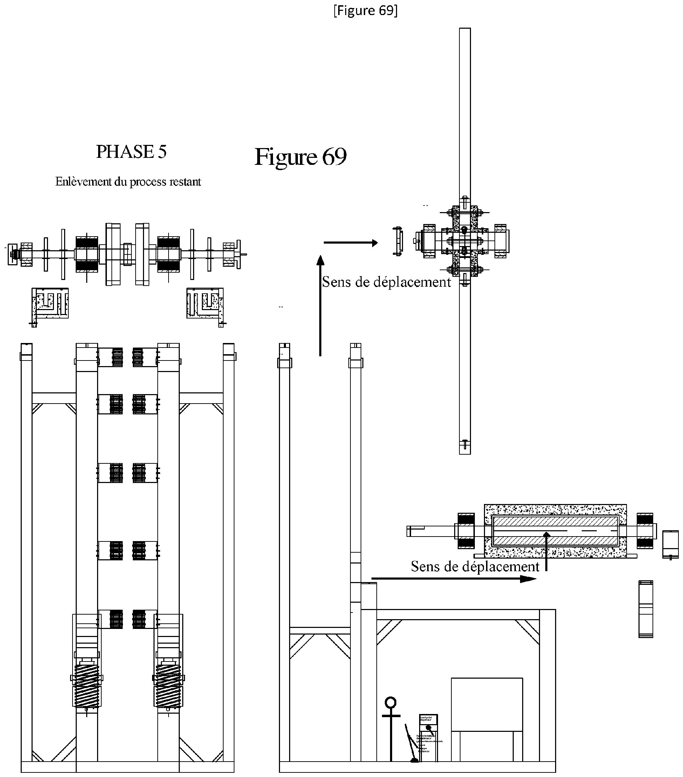

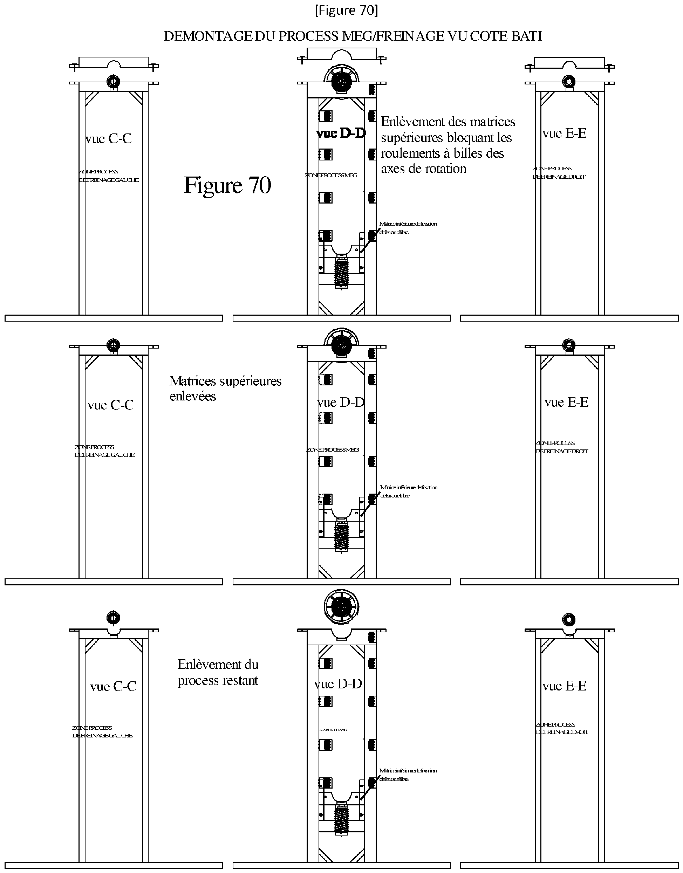

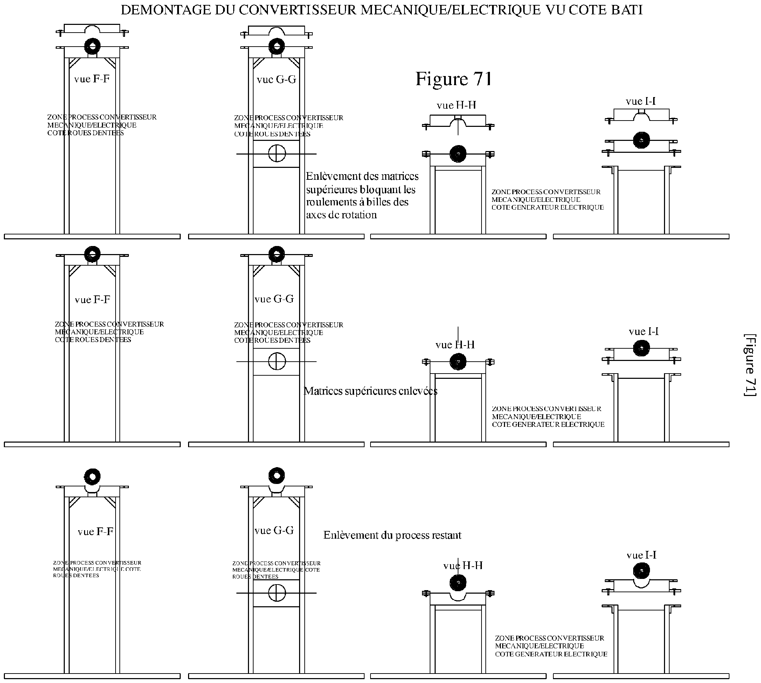

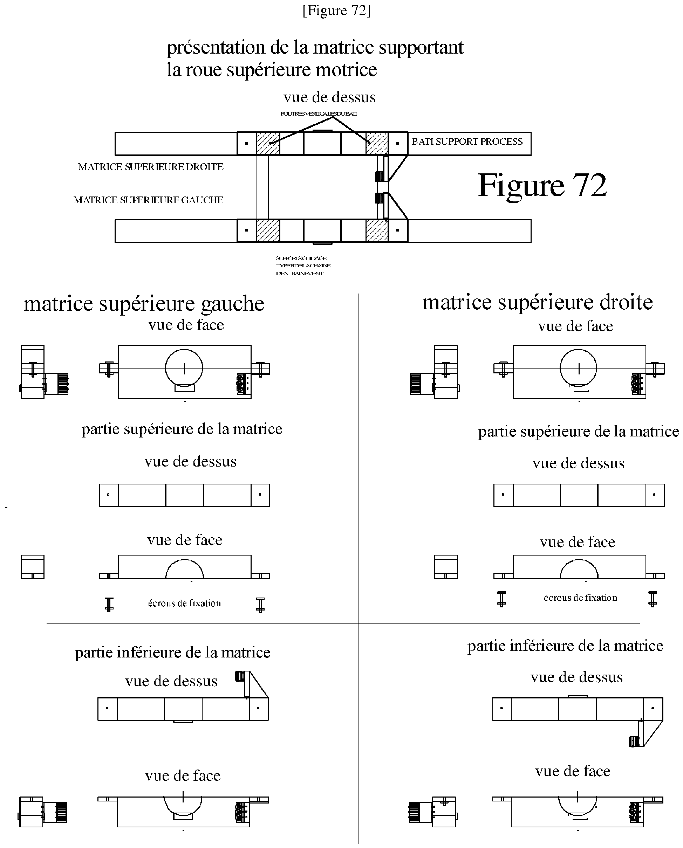

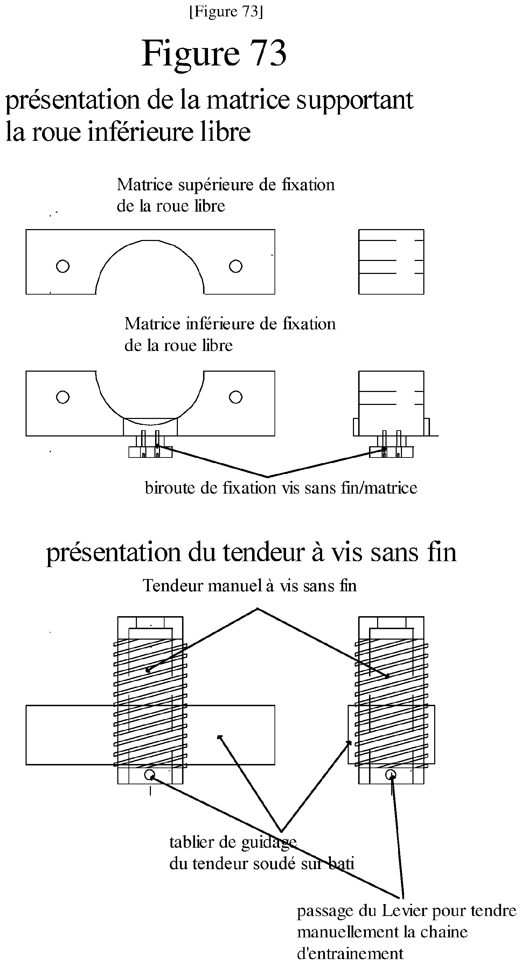

### Se baser sur les [Figure 6], [Figure 40] et [Figure 43] pour les explications ci-dessous

Le « MBMDG » est constitué de deux parties, une partie immobile constituée d'un bâti posé au sol et une partie mobile en mouvement perpétuel fixé sur ce bâti.

Via la partie mobile, ce moteur est un process actif qui utilise une dynamique de mouvement de boules métalliques dans des tubes, sous l'action de la gravité terrestre, générant ainsi un différentiel perpétuel de masses issues des boules par rapport à un axe de symétrie passant par deux roues, l'une en partie supérieure du process dite « motrice » et l'autre en partie inférieure du process dite « libre ».

Ce différentiel de masse active alors la rotation des 2 roues via l'intermédiaire d'une chaine d'entrainement à laquelle sont rattachés les tubes remplis de boules métalliques et ayant une trajectoire portée et délimitée par les 2 roues.

La roue motrice transmet alors l'énergie mécanique produite par le « MBMDG » à un autre process dit esclave (ici ce sera le convertisseur en énergies mécanique/électrique).

La roue libre située en dessous de la roue motrice sur le même axe vertical aura pour rôle de tendre la chaine d'entrainement afin de mieux fluidifier son mouvement en circuit fermé.

Ce process complet aura l'aptitude de privilégier la production électrique en courant alternatif sur celle en continu pour des raisons de meilleur efficacité technique dans sa délivrance dans les réseaux publics de distribution d'énergie.

### Equipements additionnels au MBMDG:

a) Nécessité d'équiper le MBMDG d'un système de régulation de vitesse de rotation pour éviter un emballement mécanique du process et d'un système de freinage pour le mettre à l'arrêt.
b) Le process dit esclave sera ici un convertisseur d'énergies qui aura pour but de transformer l'énergie mécanique issue de la roue motrice du MBMDG en énergie électrique via l'utilisation d'un générateur électrique de nouvelle génération.

## Revendications

1. Le descriptif technique du « MBMDG » est expliqué intégralement dans les paragraphes et sous paragraphes énumérés dans cette table des matières:
***Paragraphe I:** Description du process « MBMDG», page 4*
A) Description mécanique et fonctionnelle du process «MBMDG», page 4
B) Composants additifs optimisant le fonctionnement mécanique de la partie mobile du process «MBMDG», page 8
C) Description du tube porte-boules, page 10
D) Description de la chaine d'entrainement, page 11
E) Description des roues motrice et libre, page 13
F) Le système d'accouplement d'un process distinct sur le «MBMDG», page 14
G) Description du bâti portant la partie mobile du process «MBMDG», page 15
***Paragraphe II** : Principe d'exploitation et de la maitrise de la gravité terrestre sur la partie mobile du process « MBMDG », page 17*
A) Influence de la gravité terrestre sur tout composant mécanique de la partie mobile du process «MBMDG», page 17
B) Synthèse des forces gravitationnelles actives agissant sur la roue motrice, page 19
C) Forces de contre-réactions émises par le process sur les forces issues de celles gravitationnelles appliquées aux boules métalliques, page 22
***Paragraphe III:** Optimisation fonctionnelle du process «MBMDG», page 23*
A) Process élaboré dans le cadre de la conception d'un premier prototype industriel, page 23
B) Possibilité d'optimiser le rendement énergétique de ce process spécifique après sa mise en fabrication industrielle page 24
***Paragraphe IV** : Systèmes de freinage et de régulation de la vitesse adjoints au MBMDG, page 26*
***Paragraphe V :** Convertisseur d'énergie mécanique en électrique, page 28*
***Paragraphe VI :** Utilisation du process « MBMDG* + *convertisseur mécanique* / *électrique » dans diverses applications industrielles de production d'électricité renouvelable, page 29*
***Paragraphe VII:** Maintenance du process « MBMDG* + *convertisseur mécanique* / *électrique»: méthodologie de démontage et de remontage du process, page 33* Nota:
Le « MBMDG » sera appelé plus simplement **M**oteur à **E**nergie **G**ravitationnelle (en abrégé « MEG ») dans les descriptifs techniques situés en pages suivantes.
Les dessins exposés dans ce document (figures 1 à 73) sont conçus en CAO.
***I) Description du process «MBMDG»***
**A) Description mécanique et fonctionnelle du process MBMDG**
**1) Le process possède une partie mobile comprenant :**
[Figure 1] et [Figure 2] en appui aux explications ci-dessous
**a) Deux roues,** une dite « roue motrice » située en position haute du process et une autre dite « roue libre » située en position basse du process.
Situées sur le même axe vertical, l'une en dessous de l'autre, par leur position et leur diamètre, elles délimitent par contact mécanique la trajectoire de la chaine d'entrainement qui relie les deux roues en un circuit fermé.
Elles canalisent également le mouvement circulaire de la chaine d'entrainement lorsque celle-ci se trouve en contact mécanique direct avec les roues.
**La roue libre :**
Elle a un rôle supplémentaire de tendre de façon permanente la chaine d'entrainement verticalement vers le bas afin qu'elle ait une trajectoire stable avec un mouvement fluide sans anicroches mécaniques.
**La roue motrice :**
La chaine d'entrainement, épousant la forme circulaire de la roue motrice sous l'action de la gravité terrestre, entraine par son mouvement cette dernière dans un mouvement de rotation par contact mécanique de friction.
Cette roue est dite motrice car elle a pour rôle de transférer l'énergie mécanique produite par la chaine d'entrainement du MEG à un autre process distinct dit esclave via une connexion inter-arbres « roue motrice du MEG/arbre de rotation process esclave ».
**b) Une chaîne d'entrainement process** ayant sa trajectoire délimitée par la position et le diamètre des 2 roues dites « motrice » et « libre » et générant, lorsque elle est en mouvement, la rotation des 2 roues par contact mécanique de friction.
Sa portion de trajectoire circulaire est canalisée par les 2 roues.
Sa portion de trajectoire verticale est canalisée par des galets de guidage fixés au bâti supportant la partie mobile du process (bâti non représenté sur les figures).
Elle est constituée de paires de mailles dites « inférieure » et « supérieure» liées entre elles par des axes de rotation verrouillées par goupilles.
**c) Des tubes porte-boules,** remplis de boules métalliques, équipant chaque maille supérieure de la chaine d'entrainement.
Ils se regroupent en un ensemble de tubes accolés les uns aux autres par maille supérieure.
L'inclinaison du tube porte-boules, spécifique à un point donné de la trajectoire de la chaine d'entrainement, entraine le mouvement linéaire des boules métalliques dans leur tube de guidage respectif sous l'influence de la gravité terrestre appliquée à leurs propres masses.
**2) Le process possède une partie fixe portant la partie mobile comprenant:**
[Figure 4] et [Figure 5] en appui aux explications ci-dessous
**a) Un bâti dit « support process** » portant les 2 roues motrice et libre.
Chaque roue a son arbre de rotation bloqué dans deux matrices fixées au bâti équipée chacune de roulements à billes. Chaque matrice est démontable en deux parties, une dite inférieure supportant le poids de la roue avec son roulement à billes et l'autre dite supérieure immobilisant le roulement à billes (voir [Figure 72] et [Figure 73]).
**b) Des galets de guidage de la chaîne d'entrainement** sont fixés sur des supports spécifiques liés au bâti support process. Ils canalisent la verticalité de la trajectoire de la chaine d'entrainement par contact mécanique.
Le nombre exact de supports de guidage de la chaine d'entrainement initialement à neuf dans l'étude pourra être revu en quantité lors de la mise en marche d'un prototype.
**c) D'une vis sans fin par matrice,** en partie basse du process au niveau de la roue libre, qui a pour rôle soit de tendre en permanence la chaine d'entrainement dans sa trajectoire verticale, l'assurant ainsi d'un mouvement fluide sans anicroches mécaniques, soit de la détendre en vue de son démontage ultérieur du process.
La vis sans fin est manipulable en montée/descente par un opérateur via l'utilisation d'un levier.
Un tablier-support, affecté à chaque matrice, guide en mouvement vertical la vis sans fin lorsqu'elle est actionnée manuellement. Il est fixé au bâti support process.
La vis sans fin est solidaire mécaniquement de la roue libre via sa matrice mobile portant les roulements à billes gérant l'arbre de rotation de la roue libre.
La matrice mobile se déplace verticalement en montée/descente dans des guides fixés au bâti support-process via le réglage des 2 vis sans fin.
**3) Synthèse mécanique du process « MBMDG»:**
[Figure 6] et [Figure 7] en appui aux explications ci-dessous
Ces figures décrivent le process complet comprenant ses parties mobile et fixe.
Pour la description du tube porte-boules, voir le sous-paragraphe I-C
Pour la description de la chaine d'entrainement voir le sous-paragraphe I-D
Pour la description des roues motrice et libre, voir le sous-paragraphe I-E
Pour la description du bâti, voir le sous-paragraphe I-G
**4) Principe de fonctionnement de la partie mobile du process:**
Dans la partie mobile du process décrite précédemment, le mouvement des boules métalliques, dans leurs tubes porte-boules portés par la trajectoire de la chaine d'entrainement, entraine le mouvement de cette dernière par une dynamique énergétique d'un ensemble de forces gravitationnelles affectées chacune à une boule métallique.
Cette dynamique est la conséquence mathématique de calculs sur les moments de force :
a) Attribution d'un moment de force constitué d'une force gravitationnelle exercée sur chaque boule alliée à une distance spatiale entre le point d'application de la force et l'axe vertical passant par les 2 roues.
b) L'addition de tous les moments de force, appliqués chacun à une boule par rapport à l'axe vertical passant par les 2 roues à un instant T du mouvement de la chaine d'entrainement, génère synthétiquement un unique moment d'une force finale, déduit par calculs, qui provoque alors le mouvement rotatif de la chaine d'entrainement autour des deux axes de rotation des « roue motrice » et « roue libre » .
c) Cette chaine d'entrainement, par son mouvement, entraine ensuite les 2 roues « motrice » et « libre » par contacts de friction mécanique dans un sens unique de rotation.
**S'aider du sous paragraphe II- B pour une meilleur compréhension.**
Ici dans le process spécifique décrit dans les figures 1 et 2, le sens de rotation des roues se fait dans le sens inverse des aiguilles d'une montre.
[Figure 3] décrit un autre process au même principe de fonctionnement de type gravitationnel que celui décrit dans la figure 1. Par contre, dans ce process le sens de rotation des roues est alors dans le sens des aiguilles d'une montre.
**Conclusion :** Les parties mobile et fixe du process « MBMDG », décrites mécaniquement et fonctionnellement dans le paragraphe I-A, définissent bien le moteur à énergie gravitationnelle de type « **M**oteur à **B**oules **M**étalliques en **D**ynamique **G**ravitationnelle».
**B) Composants additifs optimisant le fonctionnement mécanique de la partie mobile du process «MBMDG»**
[Figure 8] et [Figure 9] en appui aux explications ci-dessous
Ces figures permettent de découvrir des composants additifs au process « MEG» :
La chaine d'entrainement est un enchaînement de paires «maille supérieure/maille inférieure».
**1) Maintien de la chaine d'entrainement lors de son contact avec les 2 roues :**
**Le limiteur de rotation maille à 11°25** équipe chaque maille supérieure portant son tube porte-boules.
Lorsque la chaine d'entrainement est en trajectoire circulaire sur les 2 roues, ce composant permet à la maille supérieure de rester bien perpendiculaire à la circonférence de la roue motrice ou libre.
A savoir qu'ici, l'angle de rotation inter maille est à 11°25, valeur imposée par la conception d'une chaine d'entrainement constituée ici de 64 paires de mailles supérieure/inférieure.
**2) Maintien de la chaine d'entrainement dans sa trajectoire verticale entre les 2 roues par :**
**a) L'appendice circulaire équipant chaque maille supérieure.**
**b) Le verrouilleur en position verticale des chainons adjacents** équipant chaque maille inférieure.
Ces deux éléments maintiennent les mailles inférieure et supérieure de la chaine d'entrainement en position bien perpendiculaire à la trajectoire verticale de la chaine d'entrainement.
Ils sont là pour contreréagir à l'influence de la charge gravitationnelle de chaque boule dans leur tube porte-boules respectif par rapport à la trajectoire verticale de la chaine d'entrainement.
L'ensemble de ces charges gravitationnelles, sans l'action des 2 composants décrits précédemment, tendraient à mettre les mailles en biais de la chaine d'entrainement par rapport à sa trajectoire verticale et assureraient ainsi un mouvement non fluide avec des anicroches mécaniques.
**c) Les galets de guidage** guident la chaine d'entrainement dans sa trajectoire verticale entre les 2 roues motrice et libre. Ces galets de guidage équipés chacun d'un roulement à billes, se regroupent par trois, fixés sur un support spécifique lié au bâti support process (bâti non représenté dans les figures) .
Ces différents composants additionnels sont décrits dans les sous-paragraphes I-D et I-G
**C) Description du tube porte-boules**
[Figure 10] en appui aux explications ci-dessous
Le tube porte-boules est constitué d'un tube cylindrique équipé de 2 chapeaux A et B à ses extrémités et de 2 menottes A et B.
Les chapeaux permettent de vider ou de remplir le tube en boules métalliques.
Servant de butée, Ils limitent aussi la course des boules dans le tube.
Les menottes permettent de fixer le tube sur les 2 axes de rotation de la maille supérieure de la chaine d'entrainement auquel il est rattaché.
Le tube est rempli de boules métalliques qui se déplaceront alternativement dans un sens ou dans l'autre opposé en fonction de l'action de la gravité terrestre et de l'inclinaison du tube imposée par un point donné de la trajectoire de la chaine d'entrainement.
Le tube porte-boules se déplacera en ayant une mobilité d'inclinaison permanente en fonction du mouvement de la chaine d'entrainement sur sa trajectoire à laquelle il est rattaché.
Dans la figure 10, nous partons sur un exemple d'un ensemble de 4 tubes accolés entre eux par maille supérieure et équipés chacun de 5 boules.
Ici, le diamètre du tube est tributaire du diamètre d'une boule.
**Modes de fabrication :**
- Les tubes sont de 2 tôles méca-formées soudées entre elles
- Les chapeaux et les menottes sont des pièces brutes de fonderie usinées
- Les boules métalliques sont des brutes de fonderie meulées, abrasées et polies en surface
**D) Description de la chaîne d'entrainement**
**1) Les mailles de la chaîne d'entrainement** :
[Figure 11] et [Figure 12] en appui aux explications ci-dessous
La chaine d'entrainement est constituée de mailles fixées entre elles par des axes de rotation verrouillés par des goupilles.
Ces axes permettent deux mailles successives de se mouvoir l'une par rapport à l'autre.
Ici dans ces figures, nous avons un angle maxi de 11,25° de mouvance d'une maille par rapport à celle adjacente.
**Les mailles sont de 2 types :**
- La maille supérieure portant le tube porte-boules
- La maille inférieure servant de liaison entre 2 mailles supérieures
La chaine d'entrainement est formée par paires « maille supérieure / maille inférieure ».
**2) Les chaînons constituant les mailles**
Chaque maille supérieure est constituée de deux chainons dits gauche supérieur et droit supérieur.
Chaque maille inférieure est constituée de deux chainons dits gauche inférieur et droit inférieur.
**a) Maille supérieure :**
Les 2 chainon supérieurs gauche et droit sont solidarisés entre eux par deux axes de rotation et ils sont séparés par un intervalle où se logeront un ensemble de tubes porte-boules accolés.
Cet ensemble de tubes porte-boules sera fixé sur les 2 axes de rotation des chainons supérieurs .
b) **Maille inférieure :**
Les 2 chainons inférieurs gauche et droit sont solidarisés entre eux par un axe de rotation et ils sont séparés par un vide où se mouveront les tubes porte-boules.
Elle a pour rôle de lier toutes les mailles supérieures.
**c) Composants additionnels aux chaînons supérieurs et inférieurs:**
[Figure 13] en appui aux explications ci-dessous
Chaque chainon supérieur comprend un limiteur de rotation maille à 11,25° et un appendice circulaire s'encastrant dans une cavité circulaire située dans la maille inférieure.
Chaque chainon inférieur comprend un verrouilleur en position vertical des chainons adjacents.
**Modes de fabrication :**
- Les chainons sont des bruts de fonderie usinés
- Les verrouilleurs en position vertical des chainons adjacents sont des tôles prédécoupées et soudées sur les chainons.
- Les limiteurs de rotation sont des bruts de fonderie usinés et soudés sur les chainons
**E) Description des roues motrice et libre**
**1) La roue motrice :**
[Figure 14] en appui aux explications ci-dessous
La roue motrice supporte par gravité la chaine d'entrainement qui l'entraine alors par friction autour d'un axe équipé de deux matrices fixes à roulements à billes, supportées par le bâti support process.
La roue est dite motrice car elle sert à transmettre l'énergie mécanique produite par la chaine d'entrainement vers un autre process indépendant dit esclave via une interconnexion inter-arbres de rotation.
**2) La roue libre :**
[Figure 15] en appui aux explications ci-dessous
La roue libre a pour rôle de guider la chaine d'entrainement et de la tendre vers le bas autour d'un axe équipé de deux matrices mobiles à roulements à billes qui se déplacent en vertical dans des guides fixés au bâti support process.
La tension appliquée à ses matrices mobiles se fait par l'utilisation de deux tendeurs à réglage manuel de type « vis sans fin ». Il y a un tendeur par matrice mobile.
La tension générée sur la chaine d'entrainement par la manipulation des tendeurs sera d'une valeur juste nécessaire pour avoir un simple contact par friction entre la roue libre et la chaine d'entrainement.
La roue est dite libre car elle est complètement effet de la chaine d'entrainement et ne produit donc pas d'énergie mécanique utile à un process quelconque.
**F) Le système d'accouplement d'un process distinct sur le MBMDG**
[Figure 16] en appui aux explications ci-dessous
**Ils sont de deux types :**
- Type A : Ils relient les arbres de rotation de 2 process « MEG » identiques entre eux
- Type B : Ils relient deux arbres de rotation, l'un de la roue motrice du « MEG » et l'autre de la roue d'un process dit esclave.
Ici le process esclave sera le convertisseur énergie mécanique / électrique défini au paragraphe V.
**Modes de fabrication :**
- Tous les composants des roues motrice et libre et des accouplements sont des bruts de fonderie usinés
**G) Description du bâti portant la partie mobile du process MBMDG**
[Figure 17] en appui aux explications ci-dessous
**Il est constitué d'une structure métallique tubulaire portant :**
**a) des matrices à roulements à billes** équipant par deux les axes de rotation des roues motrice et libre.
- **Coté roue motrice:** la matrice est en 2 parties, une partie inférieure fixée au bâti et une partie supérieure détachable.
- **Coté roue libre:** la matrice est en 2 parties, une partie inférieure mobile fixée sur une vis sans fin guidée par un tablier fixé sur bâti et une partie supérieure détachable. La matrice complète se déplace verticalement par l'action de la vis sans fin sur des guides de déplacement fixés au bâti support process.
**b) De tendeurs de type « vis sans fin »** qui tendent la chaine d'entrainement vers le bas via l'intervention manuelle d'un opérateur intervenant verticalement sur la roue libre. Après réglage de la tension, l'opérateur mettra ensuite des verrous de blocage sur les guides de déplacement de la matrice pour empêcher que la chaine d'entrainement se détende en fonctionnement.
**c) Des supports de guidage de la chaine d'entrainement** fixés sur bâti support process, équipés chacun de 3 galets d'entrainement.
**Intégration des supports des galets de guidage de la chaine d'entrainement dans le bâti support process :**
[Figure 18] et [Figure 19] en appui pour un descriptif
la figure 19 est intégrée dans la figure 18
**Intégration du tendeur de la chaine d'entrainement dans le bâti:**
[Figure 20] en appui pour un descriptif
**Modes de fabrication :**
- Les matrices et les vis de tension sont des bruts de fonderie usinés.
- L'ossature métallique du bâti est formé de poutrelles méca-formées.
- Les supports de guidage de la chaine d'entrainement sont des tôles méca-formées soudées entre elles et usinées, équipés de galets standards du commerce.
- Les roulements à bille seront de type étanches issus du standard du commerce.
***II) Principe d'exploitation et de la maîtrise de la gravité terrestre sur la partie mobile du process « MBMDG »***
**A) Influence de la gravité terrestre sur tout composant mécanique de la partie mobile du process « MBMDG»** [Figure 21] et [Figure 22] en appui aux explications ci-dessous Ces figures, représentant la partie mobile du MEG, se décomposent en 4 figures successives complémentaires :
**1) Coté chaine d'entrainement,** [Figure 23] en appui aux explications ci-dessous
L'ensemble des mailles de la chaine d'entrainement côté gauche de l'axe de symétrie A1 totalise la même somme des moments des forces gravitationnelles agissant sur elles que celle des moments des forces gravitationnelles agissant sur l'ensemble des mailles de la chaine d'entrainement situées côté droit de l'axe de symétrie A1.
**Conclusion:** l'ensemble de la chaine d'entrainement sans être équipé de tubes porte-boules est neutre coté influence sur la rotation du MEG
**2) Coté tubes porte-boules sans boules,**
[Figure 24] en appui aux explications ci-dessous
**Tubes C et C bis:**
L'ensemble des tubes C côté gauche de l'axe de symétrie A1 totalise la même somme des moments des forces gravitationnelles agissant sur eux que celle des moments des forces gravitationnelles agissant sur l'ensemble des tubes C bis situés côté droit de l'axe de symétrie A1.
**Tubes B et B bis:**
L'ensemble des tubes B coté haut à gauche par rapport au point de symétrie A2 totalise la même somme des moments des forces gravitationnelles agissant sur eux que celle des moments des forces gravitationnelles agissant sur l'ensemble des tubes B bis situés coté bas à droite par rapport au point de symétrie A2.
**Tubes A et A bis:**
L'ensemble des tubes A côté haut à droite par rapport au point de symétrie A2 totalise la même somme des moments des forces gravitationnelles agissant sur eux que celle des moments des forces gravitationnelles agissant sur l'ensemble des tubes A bis situés coté bas à gauche par rapport au point de symétrie A2.
**Conclusion:** l'ensemble des tubes porte-boules sans être chargé de boules est neutre coté influence sur la rotation du MEG.
**3) Coté ensemble des boules,** [Figure 25] en appui aux explications ci-dessous
La somme totale des moments de chaque force gravitationnelle appliquée à chaque boule située côté gauche de l'axe de symétrie A1 est supérieure à la somme totale des moments de chaque force gravitationnelle appliquée à chaque boule situé côté droit du même axe de symétrie.
**Conclusion:** l'ensemble des boules génère la rotation de tout le process MEG.
Ici dans le process actuel décrit par la figure 1, la rotation se fait dans le sens inverse des aiguilles d'une montre.
Dans l'autre process similaire en fonctionnement gravitationnel en figure 3, la rotation se fait dans le sens des aiguilles d'une montre.
**4) Coté galets de guidage de la chaine d'entrainement,** [Figure 26] en appui aux explications ci-dessous
Les galets de guidage de la chaine d'entrainement fixés sur le bâti support process (non représenté sur le dessin) est **neutre** coté influence sur la rotation du MEG.
Ils ne se contentent que de maintenir la chaine d'entrainement dans sa trajectoire verticale lors de son mouvement.
**Conclusion :**
La chaine d'entrainement entraine la roue motrice par un différentiel permanent de 2 sommes de moments de forces gravitationnelles appliquées chacune à une boule en mouvement dynamique par gravité terrestre dans son tube respectif rattaché à la chaine d'entrainement en mouvement, le tout par rapport à un axe vertical ralliant les 2 roues motrice et libre.
**B) Synthèse des forces gravitationnelles actives agissant sur la roue motrice**
**1) Calcul de la force gravitationnelle « Fgx » agissant sur le groupe de boules situé sur chaque maille supérieure :**
[Figure 27] et [Figure 28] en appui aux explications ci-dessous
La figure 28 est la représentation vectorielle en newton du poids des boules de la figure 27.
La force gravitationnelle « Fgx » représente le poids total du nombre de boules rattachées à une maille supérieure.
Les forces gravitationnelles « Fgx » sont identifiées chacune par maille supérieure avec une numérotation en x allant de 1 à 64.
Les forces Fg1 à Fg64 possèdent chacune la même intensité de force gravitationnelle.
Dans cet exemple de process, nous avons 5 boules par tube X 4 tubes soit 20 boules par maille supérieure.
1) Volume d'une boule: 4 x 3,14 x R x R x R/3
ici le rayon d'une boule est de 19,75 mm
soit un volume de 32,253 cm3
2) Poids d'une boule en fer:
7,874 g/cm3 x 32,253 cm3 = 253,96 g
3) Poids de 20 boules de fer:
253,96 g x 20 = 5079, 2 g
soit **Fgx** = 5,0792 kg appliqué à chaque maille supérieur de chaine
2) Calcul de la force gravitationnelle finale « FgF », appliquée à la roue motrice:
[Figure 29] et [Figure 30] en appui aux explications ci-dessous
**a) Force de synthèse « FgG » appliquée côté gauche de la roue motrice :**
Soit (Fg1 + Fg2 + Fg3 + Fg4 + Fg5 + Fg6 + Fg7 + Fg8 + Fg9 + Fg10 + Fg11 + Fg12 + Fg13 + Fg14 + Fg15+ Fg16 + Fg17 + Fg 18 + Fg 19 + Fg 20 + Fg21 +Fg 22 + Fg23 + Fg24 + Fg25) x 9,81 NM x D1 + (Fg64 x D64 + Fg63 x D63 + Fg26 x D26 + Fg27 x D27 + Fg28 x D28) x 9,81NM
Soit 25 x Fg1 x 9,81 NM x D1 + Fg1 x 9,81NM x (D64 + D63 + D26 + D27 + D28)
Soit 25 x 5,0792 kg x 9,81 NM x 1,767 m + 5,0792 kg x 9,81 NM x (0,330+0,147 +1,601+1,190+0,599)
Soit 2201,10 + 5,0792x 9,81NM x3,867 m= 2201,10+192,68 = 2393,78 NM
FgG x R1 = 2393,78 NM avec R1=0,869 m (R1 est le rayon de la roue motrice)
FgG x 0,869 = 2393,78 NM
d'où FgG = 2754,63 NM soit 280,80 kgs
**b) Force de synthèse «FgD», appliquée côté droit de la roue motrice:**
Soit (Fg33 + Fg34 + Fg35 + Fg36 + Fg37 + Fg38 + Fg39 + Fg40 + Fg41 + Fg42 + Fg43 + Fg44 + Fg45 + Fg46 + Fg47+ Fg48 + Fg49 + Fg50 + Fg51 + Fg52 + Fg53 +Fg54 + Fg55 + Fg56 + Fg57) x 9,81 NM x D57 + (Fg58 x D58 + Fg59 x D59 + Fg60 x D60 +Fg61 x D61+ Fg62x D62+ Fg29xD29 +Fg30xD30 +Fg31xD31+ Fg32.D32) x 9,81 NM
Soit 25 x Fg1 x 9,81 NM x D57 + Fg1 x 9,81 NM x (D58+D59+D60+D61+D62 +D29+ D30+D31+D32)
Soit 25 x 5,0792 kg x 9,81 NM x 0,47m + 5,0792 kg x 9,81 NM x (0,536 + 0,523 + 0,424 + 0,264 +0,064 + 0,084 + 0,754 + 1,309+1,665)
Soit 585,46 + 5,0792x 9,81NM x 5,623m = 585,46+280,17 = 865,637 NM FgD x R1 = 865,637 NM avec R1=0,869 m
FgD x 0,869 = 865,637 NM
d'où FgD = 996,13 NM soit 101,54 kgs
**c) Force de gravité finale « FgF » permettant la rotation de la roue motrice du MEG:**
FgF = FgG - FgD = 280,80 kg - 101,54 kg = 179,26kgs
soit FgF = 179,26 x 9,81 NM ou 1758,54 NM
Ici, FgF est l'équivalent d'un poids de 179,26 kgs en chute libre ayant une vitesse croissante de type P=MG, liée à l'accélération G de la gravité terrestre.
Il y aura donc nécessité de réguler la vitesse de la chute verticale de ce poids de synthèse à une valeur donnée par un système de freinage de type « courants de foucault » équipant le MEG pour éviter un emballement mécanique très nuisible du process.
Voir le paragraphe IV pour le descriptif de ce mode de freinage.
**C) Forces de contre-réaction émises par le process sur les forces issues de celles gravitationnelles appliquées aux boules métalliques**
Les composants mécaniques du process sont conçus pour permettre d'avoir un process stable en fonctionnement.
Ils génèrent des forces de contre réaction adéquates s'opposant par intensité et direction opposée aux forces issues des forces gravitationnelles appliquées aux boules métalliques en des points spécifiques de contact mécanique.
**1) Gestion de la chaîne d'entrainement dans sa trajectoire circulaire autour des roues motrice et libre :**
[Figure 31] en appui aux explications ci-dessous
Ici, le limiteur de rotation tube permet à chaque maille supérieure équipée de son tube porte-boules de rester bien perpendiculaire à la circonférence de la roue motrice ou libre
**2) Gestion de la chaîne d'entrainement dans sa trajectoire verticale en contact avec les galets de guidage**
[Figure 32] en appui aux explications ci-dessous
Ici, le verrouilleur en position verticale, l'appendice circulaire équipant chaque couple de mailles supérieure/inférieure et les galets de guidage de la chaine d'entrainement permettent à la chaine d'entrainement de rester bien verticale en fonctionnement dans sa trajectoire.
***III) Optimisation fonctionnelle du process «MBMDG»***
**A) Process élaboré dans le cadre de la conception d'un premier prototype industriel :**
Dans les chapitres précédents, la théorie fonctionnelle de la partie mobile du process « MBMDG » a exigé la conception en étude d'un certain process spécifique pour la mettre en application.
Ce process spécifique est constitué:
1) De chainons de maille supérieure et inférieure, composant la chaine d'entrainement, équipés de composants mécaniques aux dimensions et volumes spécifiques
2) D'une chaine d'entrainement constituée de 64 paires de mailles supérieure /inférieure imposant alors un diamètre spécifique des roues motrice et libre. L'écart de rotation maxi entre deux mailles s'est imposé à 11°25.
3) De tube porte-boules comprenant chacun 5 boules métalliques.
Les tubes porte-boules sont regroupés par 4 par maille supérieure de la chaine d'entrainement.
Le dimensionnement de chaque tube porte-boules est déduit en fonction du mouvement de passage du tube au niveau des roues motrice et libre et du diamètre spécifique de chaque boule emportée.
Chaque boule possède ici un diamètre spécifique.
4) De 9 supports de galets de guidage de la chaine d'entrainement fixés sur le bâti process
5) De roulements à bille, portant la roue motrice via des matrices , définis en fonction du poids total de la partie mobile du process portée par celle-ci.
6) De roulements à bille, portant la roue libre via des matrices, définis en fonction du poids de celle-ci et de la tension appliquée à la chaine d'entrainement vers le bas.
L'étude de ce process servira de base pour construire un prototype industriel dans le cadre :
1) De valider la théorie fonctionnelle d'utilisation de l'énergie gravitationnelle sur le mouvement de boules métalliques en dynamique gravitationnelle
2) D'une future utilisation industrielle à grande échelle peu onéreuse avec un process conçu dans une simplicité mécanique très fiable sans apport d'informatique industrielle.
Ce process peut devenir alors le T34 pour la lutte contre le réchauffement climatique accessible par son coût à tous les pays qu'ils soient pauvres ou riches .
**Il y a obligation au niveau éthique de société de démocratiser les solutions techniques en écologie au niveau mondial.**
Pour réaliser ce prototype, des adaptations mineures de dimensionnement de certains composants devront se faire en utilisant la science de la résistance des matériaux sans remettre en cause le principe fonctionnel mécanique du process.
L'élaboration du prototype définira le nombre exact de supports de guidage de la chaine d'entrainement nécessaire (initialement à neuf dans l'étude) et validera l'utilité ou non de l'appendice circulaire sur chaque maille supérieure .
**B) Possibilité d'optimiser le rendement énergétique de ce process spécifique après sa mise en fabrication industrielle:**
Le process spécifique, devenu un process industriel opérationnel, pourrait servir ultérieurement de base d'étude pour un futur process « MBMDG » optimisé en rendement énergétique tout en respectant la théorie fonctionnelle initiale.
Cette étude d'optimisation portera alors sur :
1) Des chainons tout équipés aux dimensions et volumes optimisés, adaptés aux mailles d'une nouvelle chaine d'entrainement via l'application de la science de la résistance des matériaux.
2) Une chaine d'entrainement à x paires de mailles supérieure et inférieure avec en conséquence un diamètre déduit géométriquement des roues motrice et libre.
3) X tubes porte-boules regroupés par maille supérieure de la chaine d'entrainement.
Chaque tube porte-boules aura un nouveau dimensionnement spécifique tributaire de son mouvement de passage au niveau des roues motrices et libre et du nouveau diamètre de chaque boule emportée.
4) X boules métalliques par tube ayant chacune un nouveau diamètre spécifique
5) X supports de galets de guidage de la chaine d'entrainement
6) Des nouveaux roulements à bille, portant les roues motrice et libre, adaptés au nouveau poids de la partie mobile du nouveau process.
A définir le type de métal adapté pour chaque composant mécanique de ce nouveau process satisfaisant l'étude de la résistance des matériaux.
En partant sur le process actuel, on pourra déjà faire une première optimisation immédiate sur le nombre de tubes porte-boules à rajouter par maille supérieure:
- Avec un 5é tube porte-boules rajouté on aura alors un FgF de 224,07 kgs
- Avec un 6° tube porte-boules rajouté on aura alors un FgF de 268,89 kgs
Rappel : **FgF** est abréviation de Force de gravité Finale (définie au sous paragraphe II-B)
***IV) Systèmes de freinage et de régulation vitesse adjoints au process « MBMDG »:***
[Figure 33] et [Figure 34] en appui aux explications ci-dessous
Ces figures décrivent le process « MEG » équipé du process « systèmes de freinage et régulation de la vitesse» sans visualiser la chaine d'entrainement
Ici nous équipons le MEG d'un système de freinage pour éviter que le process s'emballe en vitesse non contrôlée sous l'action de la force de gravité finale « FgF » appliquée sur la roue mobile.
**Il y aura 2 types de freinage du MEG** :
**1) Freinage par courants de foucault**
Les courants de foucault s'appliquent sur un disque spécifique pour effectuer un freinage électromagnétique.
Ce disque spécifique est intégré mécaniquement sur l'arbre moteur du MEG.
Les courants de foucault servent soit à réguler la vitesse de rotation du MEG en fonctionnement normal, soit au ralentissement de la rotation de la roue motrice en vue de la phase suivante d'un arrêt total du process par freinage mécanique.
Les courants de foucault sont générés par un process électrotechnique alimenté par le générateur électrique accouplé au MEG.
Ce process électrotechnique enveloppe localement le disque spécifique de freinage.
**2) Freinage mécanique** à **sabots sur disque par pression hydraulique**
Il sera du même principe que celui sur un véhicule à moteur.
Un disque spécifique est intégré mécaniquement sur l'arbre moteur du MEG.
Le système de freinage mécanique par sabots à pression hydraulique, enveloppant localement ce disque de freinage spécifique, est relié à un frein à main situé sur un pupitre opérateur via un process hydraulico-mécanique constitué principalement de tuyauteries.
**A) Principe de fonctionnement du système de freinage par courants de foucault** :
**Une chaîne d'asservissement électronique sera alors créé avec pour composants :**
- un calculateur informatique intégré dans un système électronique.
- un potentiomètre de réglage manuel de vitesse relié en entrée du système électronique envoyant des données analogiques ou numériques à ce dernier.
- un capteur de mesure de vitesse fixé en bout d'arbre moteur relié en entrée du système électronique envoyant des données analogiques ou numériques à ce dernier.
- une sortie du système électronique de type analogique ou numérique pour commander le système électro-technique de freinage par courants de foucault.
Le potentiomètre de réglage se situera sur un pupitre opérateur situé à proximité du process MEG.
Le calculateur du système électronique comparera informatiquement alors les données numériques reçus du potentiomètre et celles numériques reçues du capteur de vitesse.
En fonction du résultat du traitement informatique de la comparaison de données, le système électronique alors enverra ou non une consigne de freinage de type analogique ou numérique au système de freinage par courants de foucault.
**B) Principe de fonctionnement du système de freinage sur disque par pression hydraulique:**
Par une certaine pression hydraulique émise par le frein à main, les sabots de freinage se fermeront sur le disque de freinage et stopperont la rotation du disque par frictions mécaniques.
Ce disque solidaire à l'arbre moteur du MEG arrêtera alors la rotation de ce dernier.
**Nota :** Dans les dessins, ne sont pas représentés dans le détail technique les 2 systèmes de freinage, l'un par courants de foucault et l'autre mécanique sur disque par pression hydraulique. A savoir que les 2 systèmes de freinage s'inspirent de ceux existants sur les voitures et les camions.
***V) Convertisseur d'énergie mécanique en électrique:*** Il y a deux types de convertisseur d'énergie mécanique en électrique :
**A) Convertisseur avec un système d'amplification mécanique de rotation équipé d'un générateur électrique:**
**1) Descriptif de ce convertisseur** [Figure 35] en appui aux explications ci-dessous
Le convertisseur électrique reçoit l'énergie mécanique de la part du MEG et le transforme en énergie électrique via un système d'amplification mécanique de rotation constitué d'une grande roue et d'une petite roue à laquelle sera rattaché en bout d'arbre un générateur électrique de nouvelle génération à rendement élevé.
Le générateur électrique aura un poids et une consommation de cuivre optimisée.
Voir la possibilité d'utiliser d'autres types d'alliages métalliques autres que le cuivre.
**2) Descriptif détaillé du système d'amplification mécanique de rotation:**
[Figure 36] en appui pour un descriptif
[Figure 37] en appui pour un descriptif
[Figure 38] en appui pour un descriptif
Il est principalement constitué d'une grande roue engrenée à une petite roue
**Modes de fabrication :**
- Les grande et petite roues sans moyeu : bruts de fonderie usinés
- Moyeux de la grande roue : bruts de fonderie usinés
- Tiges filetées : standard du commerce
- Les matrices de blocage des roulements à billes : bruts de fonderie usinés
- Les roulements à billes sont de type étanche issus du standard du commerce
- Le bâti support process est constitué de poutres en tôle méca-formée
- Le générateur électrique est de fabrication standardisée pour une production en masse.
On en profitera pour étudier un générateur optimisé en rendement énergétique.
**B) Convertisseur avec un générateur électrique fixé en bout d'arbre moteur du MEG:** [Figure 41] en appui pour un descriptif avec la chaine d'entrainement non représentée.
***VI) Utilisation du process « MBMDG* + *convertisseur mécanique* / *électrique » dans diverses applications industrielles de production d'électricité renouvelable***
**A) Avec un générateur électrique en bout d'arbre du MEG**
- **Exemple de hauteur : 4 m**
[Figure 39] en appui pour un descriptif
- **Exemple de hauteur : 14 m**
[Figure 40] en appui pour un descriptif
- **D'autres hauteurs de MEGs pourront être définies** en fonction des
besoins personnalisables en énergie renouvelable, par exemple un de 6m de haut
**Applications industrielles :**
Alimenter électriquement un immeuble résidentiel ou fait de bureaux ou une propriété privée.
Possibilité d'avoir une commutation automatique pour produire de l'hydrogène et de l'oxygène par électrolyse en cas de surplus de production en électricité.
**Structures du process sans chaine d'entrainement :**
[Figure 41] et [Figure 42] en appui pour un descriptif
**B) Avec un convertisseur de type « système d'amplification mécanique de rotation équipé d'un générateur électrique »:**
**1) Exemple de hauteur : 18,5m** [Figure 43] en appui pour un descriptif
**2) D'autres hauteurs de MEGs pourront être définis** en fonction des besoins personnalisables en énergie renouvelable
**Structures du process sans chaine d'entrainement :**
[Figure 44] en appui pour un descriptif
[Figure 45] en appui pour un descriptif
[Figure 46] en appui pour un descriptif
[Figure 47] en appui pour un descriptif
[Figure 48] en appui pour un descriptif
[Figure 49] en appui pour un descriptif
[Figure 50] en appui pour un descriptif
[Figure 51] en appui pour un descriptif
Les 4 dernières figures mentionnées décrivent des coupes process
**Applications industrielles :**
Alimenter électriquement un groupe d'immeubles ou une PMI
Possibilité d'avoir une commutation automatique pour produire de l'hydrogène et de l'oxygène par électrolyse en cas de surplus de production d'électricité
**C) Utilisation de plusieurs MEGs liés les uns aux autres en série**
Dans le cadre d'intégrer un gros générateur d'électricité en sortie de MEG, il y aura nécessité de mettre plusieurs MEGs en série pour vaincre l'inertie du système au démarrage et avoir ainsi une accélération en vitesse de rotation convenable.
[Figure 52] en appui pour un descriptif Dans cette figure nous avons 3 MEGs branchés en série à titre d'exemple.
Il y aura un nombre maximal à définir de MEGs à brancher en série en fonction de la limite maximale de vitesse de rotation du MEG lié au temps de basculement des boules d'un côté à l'autre du tube où ils logent en fonction de sa nouvelle inclinaison brusque imposée par le mouvement de la chaine d'entrainement.
**Applications industrielles :**
Alimenter électriquement un groupe conséquents d'immeubles, d'habitations ou d'une grosse PMI.
Possibilité d'avoir une commutation automatique pour produire de l'hydrogène et de l'oxygène par électrolyse en cas de surplus de production d'électricité
**D) Autres applications industrielles plausibles :**
**a) Utilisation de champs de MEGs d'une surface de plusieurs hectares pour :**
- Produire en masse de l'électricité au niveau d'une grande zone géographique, en étant un outil complémentaire à celui des centrales nucléaires.
- Produire en masse de l'hydrogène (3 fois plus calorifique que l'essence) qui, stocké par pression sous forme gazeuse dans des bouteilles, réhabiliterait le bon vieux moteur à explosion, réétudié pour la circonstance, en étant allégé de toute électronique embarquée appliquant les normes écologiques drastiques actuelles.
- Produire en masse de l'oxygène pour divers besoins industriels.
**b) Utilisation de MEGs pour remplacer des groupes électrogènes** utilisés dans Les régions désertiques ou dans des structures immobilières hospitalières ou militaires.
**c) Utilisation de MEGs pour produire de l'eau potable à partir d'eau de mer**
**d) Utilisation de MEGs sur d'autres planètes** en utilisant leur propre gravité pour produire de l'électricité ou de l'hydrogène et de l'oxygène par électrolyse à partir de nappes souterraines d'eau existantes sur ces planètes
Un MEG de 4 m de haut, suivant la figure 39, aura une surface au sol de 16 m2.
Un MEG de 14m de haut, suivant la figure 40, aura une surface au sol de 110 m2.
Un MEG de 18,5m de haut, suivant la figure 43, aura une surface au sol de 157 m2
A savoir que la fabrication de MEGs en très grand nombre permettra de relancer l'industrie mécanique moribond d'un pays (fonderies, industrie métallurgique de produits finis, industrie traditionnelle automobile vieillissante, etc.)
***VII) Maintenance du process « MBMDG* + *convertisseur mécaniquelélectrique »:*** Méthodologie de démontage et de remontage du process
**A) Démontage du process** :
**a) Opération d'arrêt du MEG en 3 phases:**
[Figure 53] en appui aux explications ci-dessous
Phase 1: Freinage par "courants de foucault" pour réduire correctement la vitesse de rotation en vue de la phase 2.
Phase 2: Freinage mécanique hydraulique pour arrêt total du process
Phase 3: Blocage par installation manuelle d'une traverse dans la roue motrice
Nota : Une échelle d'accès à la roue motrice sera prévu sur le MEG et la traverse sera stockée à proximité de la roue motrice pour une future utilisation
**b) Vidage des tubes porte-boules de la chaîne d'entrainement après le blocage de la roue motrice par la traverse.**
[Figure 54] en appui aux explications ci-dessous
D'abord on vide une série de tubes porte boules côté droit de l'axe de symétrie A1 au niveau de la roue libre.
Dès que l'on a un équilibrage des forces de gravité côté gauche et droit par rapport à l'axe de symétrie A1 par tâtonnement de la résistance de mouvement de la roue libre, on enlève alors la traverse de blocage coté roue motrice et ensuite on peut faire tourner la roue libre manuellement au fur et à mesure que l'on vide les tubes porte-boules restants côté gauche et droit de l'axe de symétrie A1.
**c) Enlèvement de la chaine d'entrainement du MEG :** On agit d'abord sur la partie process gérant la roue libre pour détendre la chaine d'entrainement.
**1) Description du process gérant la partie basse du MEG (coté roue libre)**
[Figure 55] en appui pour un descriptif
**2) Détendre la chaine d'entrainement en jouant sur le process de la partie basse du MEG**
[Figure 56] en appui pour un descriptif
**3) Roue libre en position haute** [Figure 57] en appui pour un descriptif
**4)Chaine d'entrainement détendue coté roue libre**
[Figure 58] en appui pour un descriptif
**5)Chaine d'entrainement désaccouplée coté roue libre**
[Figure 59] en appui pour un descriptif
Il suffit d'enlever un axe de verrouillage entre 2 mailles au point le plus bas de la chaine d'entrainement.
**6) Chaine d'entrainement démontée complètement** maille par maille en jouant sur l'enlèvement des axes inter-mailles équipés de goupilles.
[Figure 60] en appui aux explications ci-dessous
On tire sur le restant de la chaine vers le bas au fur et à mesure de son démontage.
Prévoir une corde fixée à une extrémité de la chaine pour la retenir en chute libre via son appui sur la roue motrice.
**d) Enlèvement de la partie process « roue libre » du MEG :**
**1) déblocage de la matrice supérieure de fixation de la roue libre**
[Figure 61] en appui pour un descriptif
**2) enlèvement des liaisons de fixation des matrices supérieure et inférieure de la roue libre et des bloqueurs de l'axe de la roue libre**
[Figure 62] en appui pour un descriptif
**3) enlèvement de la matrice mobile supérieure de fixation de la roue libre**
[Figure 63] en appui pour un descriptif
**4) enlèvement du process en partie basse de la MEG**
[Figure 64] en appui pour un descriptif
**e) Enlèvement de la partie process « roue motrice et convertisseur énergie mécanique/électrique du MEG :**
**1) PHASE 1 : Enlèvement des matrices supérieures bloquant les roulements à billes des axes de rotation**
[Figure 65] en appui pour un descriptif
**2) PHASE 2 : Matrices supérieures enlevées**
[Figure 66] en appui pour un descriptif
**3) PHASE 3 : Désaccouplage de l'axe de la grande roue de l'axe de la MEG**
[Figure 67] en appui pour un descriptif
**4) PHASE 4 : Décalage du process générateur électrique**
[Figure 68] en appui pour un descriptif
**5) PHASE 5 : Enlèvement du process restant**
[Figure 69] en appui pour un descriptif
**6) Enlèvement phase par phase du process vu coté bâti**
[Figure 70] et [Figure 71] en appui pour un descriptif
Rappel : Les vues C-C, D-D, E-E, F-F, G-G, H-H et I-I sont définies en figure 48
**Remontage du process :**
On pourra en déduire les phases de remontage du process après avoir vu celles du démontage
